# EUROPEAN PATENT APPLICATION

(11) **EP 1 739 886 A1**
(43) Date of publication of application: **03.01.2007**
(21) Application number: 06290997.3
(22) Date of filing: 20.06.2006
(51) Int. Cl.: H04L 12/28

(54) **Wirelss response system for classrooms**

(30) Priority: 27.06.2005 US 694414 P; 21.10.2005 US 729428 P
(71) Applicant: Renaissance Learning, Inc, Wisconsin Rapids, WI 54495-8036 (US)
(72) Inventor: Swanson, Mark R., Wisconsin Rapids, WI 54494 (US); Moss, William L. Jr., Wisconsin Rapids, WI 54494 (US); Jungwirth, Peter William, Wisconsin Rapids, WI 54494 (US)
(74) Representative: Burbaud, Eric

(57) **Abstract**

An audience response system is provided. In various implementations, the response system includes a base station, handheld units, and a wireless network. The response system may have a prompted mode and an unprompted mode of operation. In the prompted mode of operation, the base station transmits questions to the handheld units over the wireless network. The questions are displayed to users on their handheld units. The users respond to the question, and their responses are transmitted to the base station via the wireless network. In the unprompted mode, answer templates are transmitted and displayed to the users, with the actual questions being conveyed in some other manner, such as verbally or by written handout.

## Description

The invention relates generally to wireless audience response systems, and, more particularly, to wireless audience response systems that solicit responses to questions posed to an audience by wireless communication with handheld units possessed by members of the audience.

When a presentation is given to an audience, whether it is a lecture to a class of students or a sales pitch to a group of executives, it is often difficult to gauge whether the audience is absorbing or even paying attention to the information being presented. Audience response systems address this difficulty. Many audience response systems include individual handheld units, each with several input keys. In such systems, each audience member has one of the handheld units, and, in response to a question spoken by the presenter, each audience member presses a button corresponding to the appropriate response. In most existing systems, however, the handheld units do not have display screens. Furthermore, even those that have display screens lack the ability to switch between a prompted mode, in which questions are electronically transmitted to handheld units and displayed on the screen, and an unprompted mode, in which only an answer template is transmitted to and displayed on the handheld units, with the question itself being conveyed to the audience verbally or in written form.

In accordance with the foregoing, an audience response system is provided. In various embodiments of the invention, the response system includes a base station, handheld units, and a wireless network. The response system may have a prompted mode and an unprompted mode of operation. In the prompted mode of operation, the base station transmits questions to the handheld units over the wireless network. The questions are displayed to users on their handheld units. The users respond to the question, and their responses are transmitted to the base station via the wireless network. In the unprompted mode, answer templates are transmitted and displayed to the users, with the actual questions being conveyed in some other manner, such as verbally or by written handout.

There are a variety of possible implementations of the response system. In some implementations, the question or questions are transmitted to users as part of one or more markup languages documents. The handheld units process the markup language documents and display the questions and appropriate answer fields to the users in accordance with the markup language documents. When used in an educational setting, the markup language documents may also contain homework assignments as well as notes to the parents or guardians of the users.
FIG. 1 illustrates a wireless audience response system according to an embodiment of the invention;
FIGS. 2 & 3 illustrate a handheld unit that may be used in an embodiment of the invention;
FIGS. 4 & 5 illustrate another handheld unit that may be used in an embodiment of the invention;
FIG. 6 illustrates the sequence of displays shown on a handheld unit for a pop quiz that is given by an audience response system, in which the response system is operating in a teacher-paced, prompted mode;
FIG. 7 illustrates the sequence of displays shown on a handheld unit for a quiz that is given by an audience response system, in which the response system is operating in a teacher-paced, unprompted mode;
FIG. 8 illustrates the sequence of displays shown on a handheld unit for a homework assignment, in which the response system is operating in a student-paced, prompted mode;
FIG. 9 illustrates the sequence of displays shown on a handheld unit for a homework assignment, in which the response system is operating in a student-paced, unprompted mode with multiple choice answer templates;
FIG. 10 illustrates the sequence of displays shown on a handheld unit for a homework assignment, in which the response system is operating in a student-paced, unprompted mode with fill-in-the blank answer templates; and
FIG. 11 illustrates a calculator function of a handheld unit according to an embodiment of the invention.

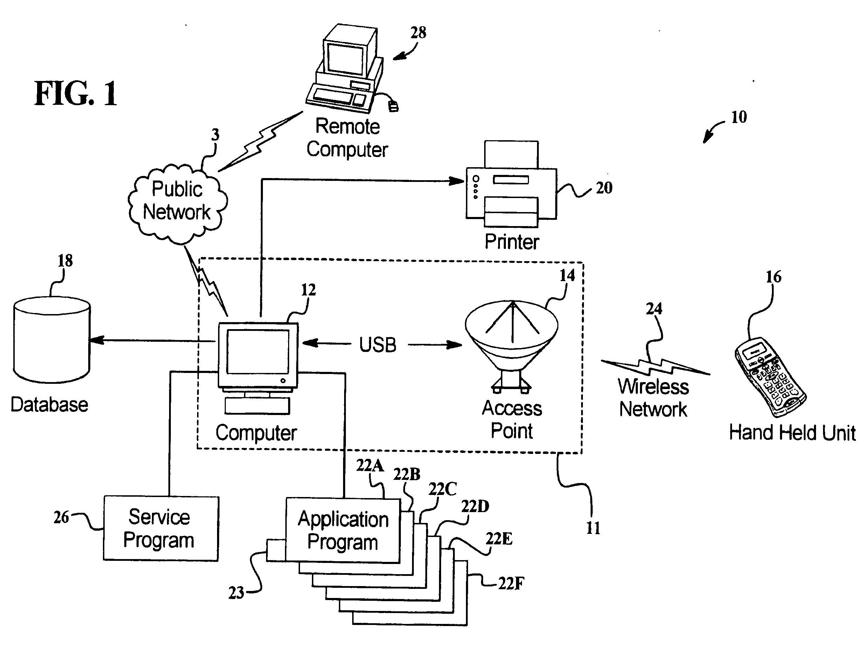

The architecture and operation of a wireless audience response system configured according to an embodiment of the invention will now be described. Referring to FIG. 1, the response system, generally labeled 10, includes a base station 11 and a plurality of handheld units 16. The base station 11 includes a computer 12 and a wireless access point (AP) 14. The computer 12 is communicatively linked to the AP 14 via universal serial bus (USB), while the AP 14 is communicatively linked to the handheld units 16 via a wireless network 24. In one embodiment, the wireless network 24 is a personal area network (PAN) operating according to the IEEE 802.15.4 standard, with the AP 14 acting as a PAN coordinator. The system 10 also includes a database 18 on which data representing questions and their corresponding answers are stored. The system 10 also includes a printer 20 communicatively linked to the computer 12, which allows an instructor or other speaker to print out results of tests or surveys taken by users of the handheld units 16, first through sixth application programs 22A-22F (generically referred to as application programs 22) executing on the computer 12, which dictate how the computer 12 administers the questions transmitted to the handheld units 16 and processes the answers received in response thereto, and a service program 26, which provides communication and routing services to the application programs 22. Finally, the system 10 may be communicatively linked with a remote computer 28 via a public network (e.g., the Internet). The remote computer 28 hosts a web site from which questions may be downloaded.

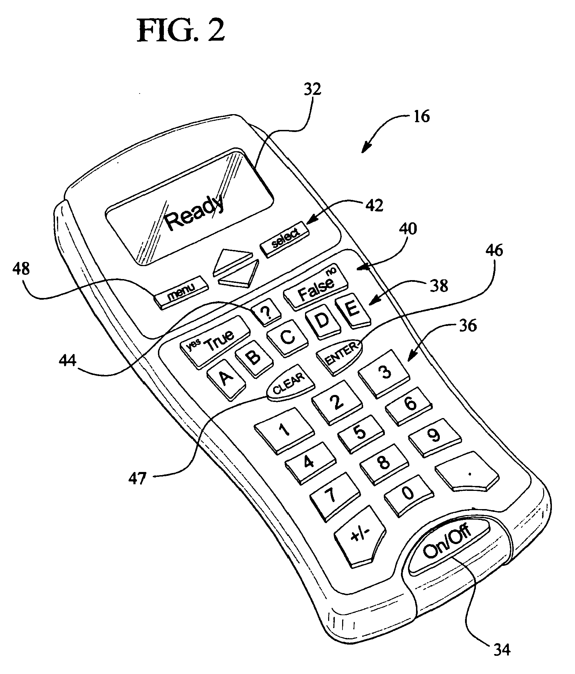

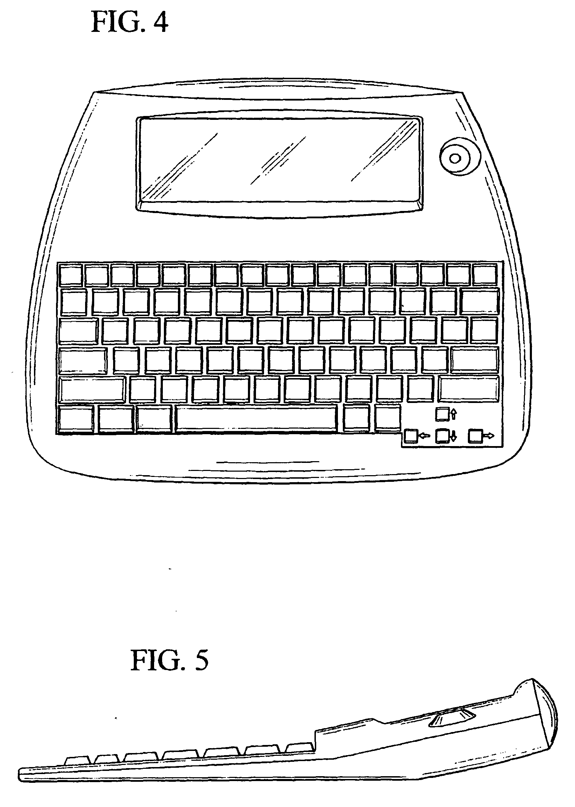

Referring to FIG. 2, an example of how the handheld unit 16 may be implemented will now be described. It is understood, however, that other configurations are possible, such as the full-keyboard configuration shown in FIGS. 4 & 5. In the markup language examples contained herein, the moniker "Wasabi" will sometimes be used to refer to the handheld unit implementation of FIG. 2. The handheld unit 16 is designed to be inexpensive, lightweight, rugged, and simple to use. It has a graphical liquid crystal display 32 and twenty-five keys to support multiple response types. The keys include an ON/OFF key 34, a group 36 of numeric keys, a group 38 of multiple choice keys, a group 40 of positive/negative keys, a group 42 of navigation keys, and group of immediate keys, including an ENTER key 46, a CLEAR key 47, an ON/OFF key 34, and a menu key 48. The ON/OFF key 34 is configured so as to reduce the chance of accidental pressing (having, for example, raised ribs on the enclosure or being aligned just below flush with the enclosure). As shown in FIG. 2, the keys are grouped into functional areas. For example, the group 38 of multiple choice keys A thru E is commonly used when responding to multiple choice questions. The group 36 of numeric keys, 0 thru 9, is used when responding to a question requiring a numeric reply. Each group of keys has elements that indicate to the user that the keys are, in fact, part of the same group. Possible ways to accomplish this include, but are not limited to key style (shape, color, label text font/size/color, etc.) and separators in enclosure (altitude, channels, borders, etc.)

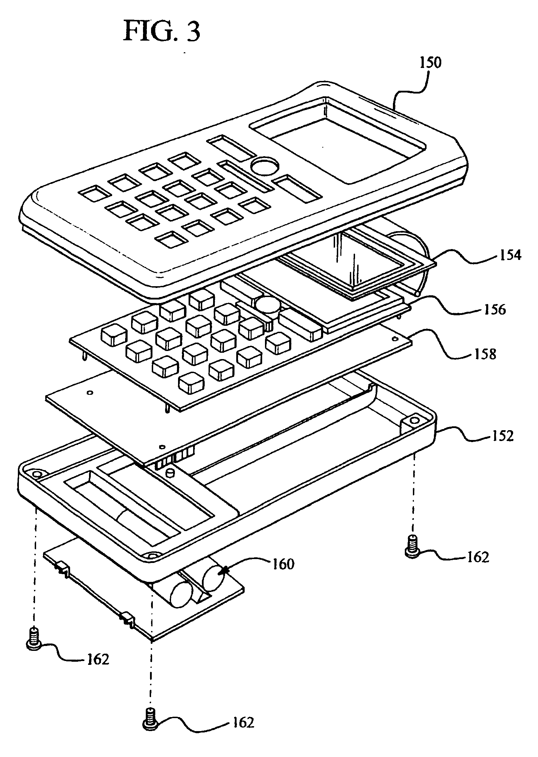

Referring to FIG. 3, the handheld unit 16, in an embodiment of the invention, includes an enclosure having a top portion 150 and a bottom portion 152. The bottom portion 152 has a recess on its outer surface, in which a pair 166 of batteries is housed. In various embodiments, the enclosure is made of rugged, lightweight, low cost plastic (e.g., polycarbonate/abs blend). The finish is textured, non-slip, and fingerprint resistant. The enclosure also prevents battery removal without the use of a tool to reduce the choking hazard. In one embodiment, the enclosure has an envelope of about 5.25 inches by about 1.8 inches by about 0.8 inches.

Disposed within the enclosure are an LCD unit 154, an elastomeric keypad 156, and a printed circuit board (PCB) 158. Disposed on the PCB 158 is a low-end microcontroller with adequate resources to support the LCD unit 154, the keypad 156 and the wireless communication functions of the handheld unit 16. Also disposed on the PCB 158 is a wireless communication circuit, such as a Chipcon CC2420 802.15.4 radio (Reduced Function Device). The power source for the components on the PCB 158, the keypad 156 and the LCD unit 154 is supplied by the pair 166 of batteries, which may be two standard AA (R6) alkaline batteries. Each handheld unit 16 has a unique identification number, which is electronically stored therein. In addition to providing electrical continuity between circuits, the PCB 158 provides at least two specialized functions. First, it incorporates the antenna for the wireless communication circuit. Second, it incorporates the appropriate landing zones for the carbon conductors on the back of the keypad 156.

The operation of the handheld unit 16 according to an embodiment of the invention will now be described. The general usage pattern is as follows: the user receives a question, which is either displayed on the LCD screen 32, or provided some other way, such as verbally or written. The user presses one or more keys to formulate a response. In one embodiment, key action is invoked on key closure. The user then presses the ENTER key 46 to transmit the response wirelessly to the base station 11. The handheld unit 16 has a response queue acts as a holding area for responses. The content of this queue changes when keys are pressed and is displayed prominently on the LCD 32. However, the actual data stored in the queue and transmitted is not necessarily what the user sees on the LCD screen 32. For example, when LCD 32 displays "True," a single data byte can be used to represent a positive response. This is done to minimize memory use and data packet size. The maximum response size is based on the size of the LCD screen 32, the font size, and/or the amount of memory available in the microcontroller of the handheld unit 16.

The functions of individual keys and groups of keys shown in FIG. 2 according to an embodiment of the invention will now be described. Pressing the ON/OFF key 34 with no other keys down toggles the device state (on or off). Pressing the CLEAR key 47 causes a response queue to be cleared. The response queue is also cleared when the handheld unit 16 is powered on.

When the ENTER key 46 is pressed, the contents of the response queue are transmitted via the wireless communication circuit. During transmission, the text "sending" is displayed on the LCD screen 32 until the next question is received from the base station 11.

The multiple choice keys group 38 is used to enter single key responses. When one of the keys of this group is pressed, the handheld unit 16 replaces the contents of the response queue. The group 40 of positive/negative keys is similarly used to enter single key responses. As with the multiple choice keys, pressing one of the positive/negative keys causes the handheld unit 16 to replace the contents of the response queue. In addition to indicating an answer of "true" or "false," the positive/negative keys are used for Yes/No responses. The handheld unit 16 also includes a "?" key 44, which may be used as a "help" key.

The group 36 of numeric keys is used to enter multi key responses. Positive, negative, whole, and decimal numbers may be entered. If the response queue contains a multiple choice or a positive/negative response when a numeric key is pressed, an implied CLEAR is executed first. When a key of the numeric key group 36 is pressed, the associated value is added to the rightmost position of the response queue, unless the queue is full, in which case it is ignored.

In an embodiment of the invention, the handheld unit 16 manages power as follows. The microprocessor sleeps as much as possible (between keypresses) to maximize device runtime. Furthermore, the handheld unit 16 automatically powers off after 30 minutes of inactivity, regardless of key states. A continuously held down key does not constitute activity. If one or more keys are held down accidentally by something sitting on the device or during storage or transport, the handheld unit 16 will power itself off when the timeout interval expires, and will not power on again until all keys are released and only the ON/OFF key 34 is pressed.

In one embodiment of the invention, the handheld unit 16 uses a virtual "key chain" having one or more "keys." The virtual key chain (or simply "key chain") stores authentication information for a particular user. Each "key" may be used to authenticate the user (and the handheld unit 16) to one of the application programs 22. The virtual key chain is stored in a memory of the handheld unit 16. The purpose of the virtual key chain is to avoid forcing the user to reauthenticate every time the user wishes to interact with one of the application programs 22.

Referring back to FIG. 1, the operation of the application program 22 according to an embodiment of the invention will now be described. The application program 22 initiates one or more "activities." As used herein, an "activity" is made up of one or more discrete tasks referred to as "actions." An activity can be a single action or a complex sequence of actions. For example, an activity can be something as simple as displaying a message to one of the handheld units 16, or an activity can be something more sophisticated such as requesting a response to a multiple-choice question. An activity can have a static design, such as a quiz that includes 10 actions, each action being a question, each action being performed sequentially. Other activities may use dynamic, adaptive branching that relies on the logic of the application program 22 to inspect each response to a question and determine what the next action should be. Some activities are classified as "live." That is, they are intended to be conducted while the handheld units 16 are communicatively linked to the computer 12.

Referring again to FIG. 1, the physical setup and software architecture of the response system 10 according to an embodiment of the invention will now be described in more detail. In this embodiment, the computer 12 is connected to the AP 12 via a USB cable. The AP 12 acts as a wireless access point on the wireless network 24. The application program 22 interacts with an operating system and service program 26 (both executing on the computer 12) to send and receive data over the USB work, through the AP 12, and over the wireless network 24 which, in this embodiment, is an IEEE 802.15.4 compliant network. To communicate with the handheld units 16, the application program 22 defines a service handler application programming interface (API) 23. The application program 22 sends hypertext transport protocol (HTTP) messages via the port along with markup language documents to the handheld units 16. The handheld units 16 respond as specified in the markup language documents, and those responses are received via the service handler API 23.

According to an embodiment of the invention, the system 10 supports two response modes: prompted and unprompted. In a prompted response mode, a question is displayed on the handheld units 16, and the audience members answer the displayed question. In an unprompted response mode, the question is not presented on the handheld units 16, but by some other method, such as a presenter reading it aloud or an audience member reading it on a handout. In an unprompted mode, the audience member still answers the question using the handheld unit 16.

In various embodiments of the invention, the application program 22 carries out activities that are paced by the presenter and activities as paced by the audience members. Since many of the examples described herein are set in the context of a classroom environment, these two types of activities will be referred to herein as "teacher-paced" and "student-paced." It is understood, of course, that the invention is not limited to classroom use. A teacher-paced activity is one in which the class participates as a whole, and where each student responds to questions generated by the application program 22. In a teacher-paced activity, the teacher controls the pace at which questions are transmitted to the handheld units 16. For example, the students may be shown only one question at a time on their handheld units 16, and the question is shown only when specified by the teacher. Students then answer only when the teacher allows the responses to be collected. If a student fails to keep pace with the class, then the application program 22 can speed the student ahead to the current action in the activity, the next time the fallen-behind student responds in any way using his handheld unit 16. A student-paced activity is one in which each student views questions and responds at his own speed. Students can be given individual student-paced activities, or the entire class may be given the same student-paced activity. The student-paced activity may be configured so that students can navigate back and forward through questions.

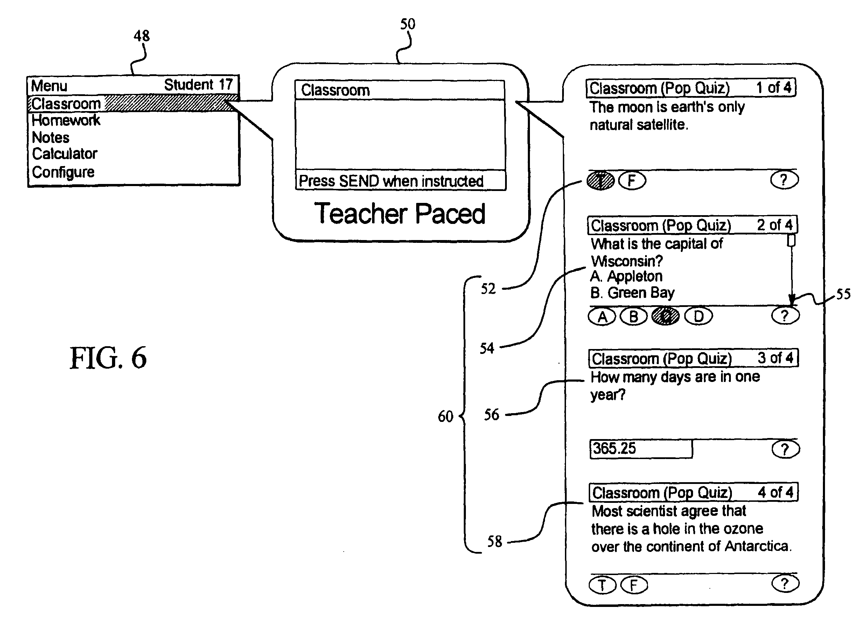

An example of a teacher-paced, prompted activity will now be described with reference to FIGS. 1 and 6. First, the application program 22 transmits a mark-up language document to the plurality of handheld units 16. The mark-up language document includes instructions for presenting a sequence 60 of questions on the handheld units 16 (for a pop quiz). Each handheld unit 16 then interprets the instructions contained in the mark-up language document and, accordingly, displays the first question 52 in the sequence. Each student has the opportunity to respond to the first question 52 by making the appropriate input to the student's handheld unit 16. When the teacher makes the appropriate input to the computer 12, the application program 22 transmits a message to the handheld units 16, that causes the handheld units to permit the students to advance to the second question 54 in the sequence 60. Note that the display containing the second question 54 includes a scroll bar 55. This process continues, with the third and fourth questions 56 and 58 being enabled in succession until the teacher ends the quiz by making the appropriate input to the computer 12.

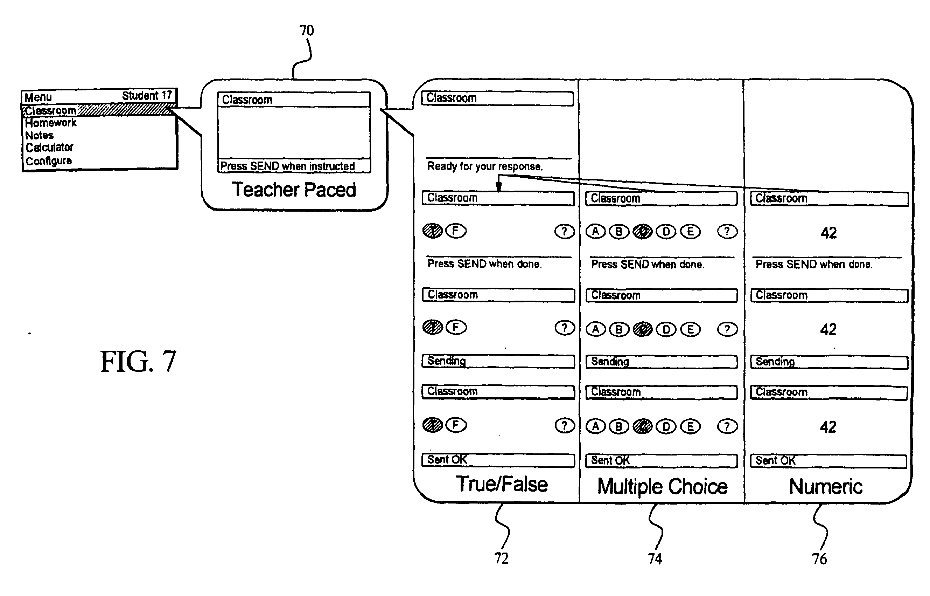

FIG. 7 illustrates the sequence of displays shown on each handheld unit 16 for a quiz that is given in a teacher-paced, unprompted mode. The sequence of actions is similar to that described in conjunction with FIG. 6, except that the mark-up language document transmitted by the application program 22 to the handheld units 16 (FIG. 1) does not include questions but rather includes one or more answer templates, such as a True/False template 72, multiple choice template 74 and a numeric template 76. The handheld units 16 display the answer templates on their respective LCD screens 32. Furthermore, instead of the questions being presented on the LCD screen 32 of each of the handheld units 16, the teacher reads the questions aloud to the students.

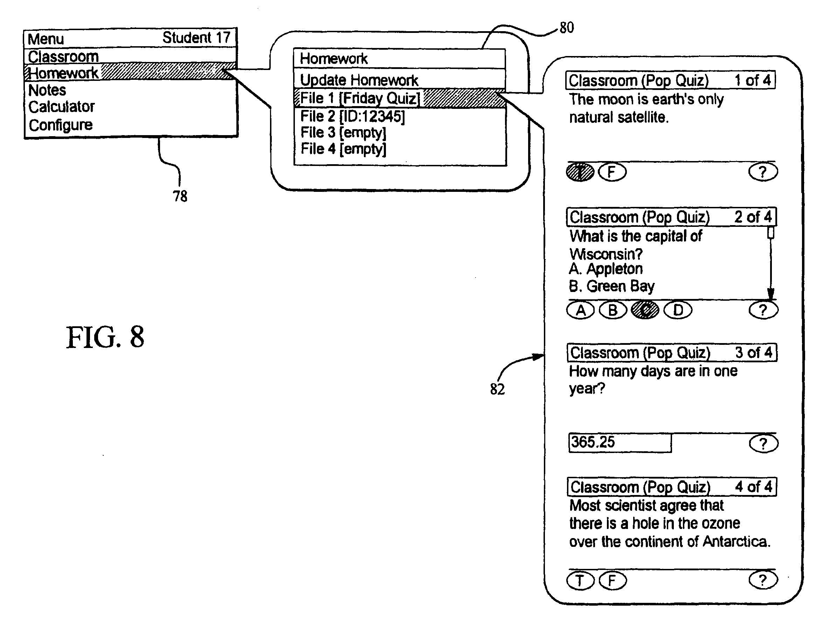

According to an embodiment of the invention, the response system 10 (FIG. 1) can also be used to allow the teacher to distribute homework assignments, and to allow the students to complete and turn in the homework assignments. In such an embodiment, the application program 22 transmits one or more mark-up language documents representing a homework assignment to the handheld units 16. Outside of class, the students individually complete the homework assignment by making the appropriate inputs into their respective handheld units. FIG. 8 illustrates the sequence of displays shown on a handheld unit for an example homework assignment in a student-paced, prompted mode. The student selects "homework" from a first menu 78, then selects "Friday Quiz" from a second menu 80. In response, the handheld unit 16 displays a sequence 82 of questions (*i.e*., in a "prompted" mode) that the student must answer. During the next classroom session, the student makes the appropriate inputs to the handheld unit 16 to cause it to transmit her answers to the application program 22, thereby "turning in" the completed homework assignment.

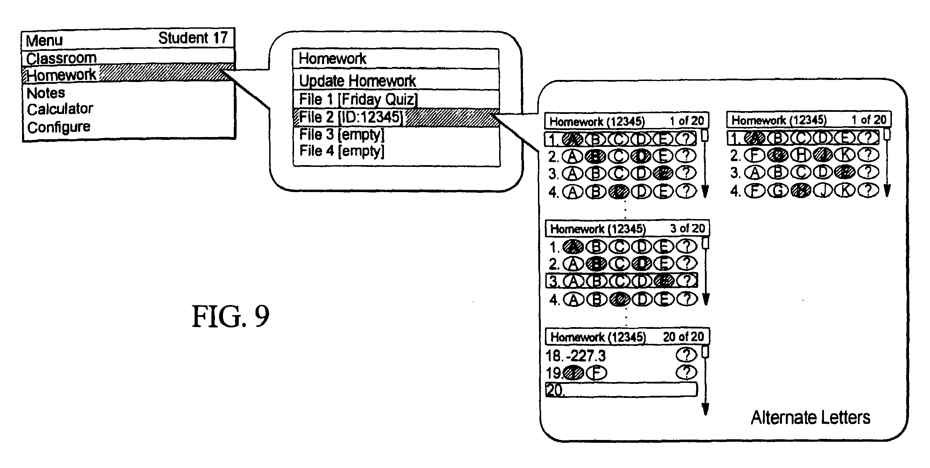

The sequence of displays for another example homework assignment is shown in FIG. 9. In this example, the teacher gives handouts containing the questions to the students or displays each question on a screen that is visible to all of the students, and the mark-up language document that the handheld units 16 receive from the application program 22 only contains answer templates. Otherwise, the procedure for completing and turning in the homework assignment is the same as described in conjunction with FIG. 8.

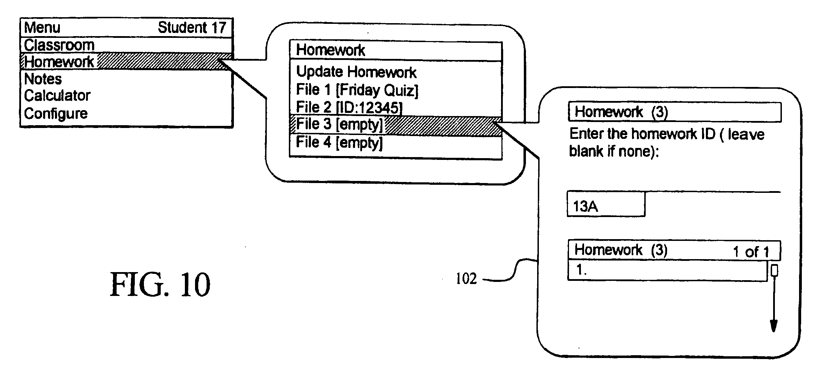

Yet another sequence of displays for a homework assignment is shown in FIG. 10. In this example, however, the teacher gives handouts containing the questions to the students. Furthermore, the application program 22 does not transmit a mark-up language document to the handheld units 16 for answering the questions, but the students instead use a generic answer form 102 that is pre-stored in the handheld units 16. Otherwise, the procedure for answering the questions and turning in the answers is the same as described in conjunction with FIGS. 8 and 9.

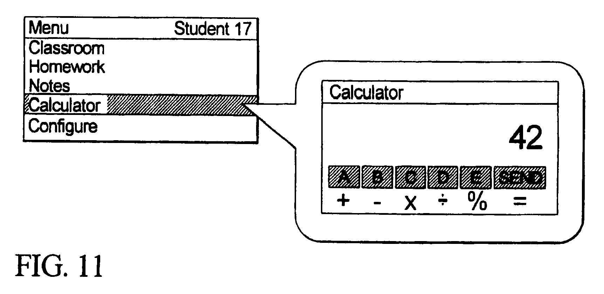

According to an embodiment of the invention, the handheld unit 16 is also able to function as a calculator. FIG. 11 illustrates how this functionality appears on the LCD screen 32. The teacher may, by making the appropriate input to the computer 12 (FIG. 1), cause the application program 22 to send commands to the handheld units 16 that will disable the calculator function.

**Service Handler API.** As noted above, in an embodiment of the invention, the handheld units 16 communicate with the application program 22 via the wireless network 24, the AP 14, the USB cable, and the computer 12. Messages sent by the handheld units 16 to the application program 22 are received via the service handler application API 23. In one embodiment, the service handler API 23 is instantiated as an HTTP port that is provided by the application program 22. The service handler API 23 is used to host a "live" activity (i.e., an activity that requires network connectivity between the handheld units 16 and the computer 12), upload homework to the handheld units 16, upload notes to the handheld units 16, and to download homework from the handheld units 16. The service program 26 connects to the service handler API 23 when the application program 22 requests it to do so.

In an embodiment of the invention, the service program 26 provides routing services for all communications between the handheld units 16 and the application program 22 until the HTTP port for the service handler API 23 is released. Thus, messages from the handheld units 16 are first received by the service program 26, and then routed by the service program 26 to the application program 22 via the service handler API 23. In one embodiment, the messages that are sent between an application program 22 and the service program 26 are in the form of HTTP messages and XML documents, while the messages sent between the service program 26 and the handheld units 16 are in the form of compact transport protocol messages and compact markup language documents. When messages arrive from the handheld units 16, the service program converts them from compact transport protocol messages and compact markup language documents into HTTP messages and XML documents and sends the HTTP messages and XML documents to the appropriate application program 22. Conversely, the application program 22 HTTP messages and XML documents to the service program 26 that are intended for one or more of the handheld units 16, which the service program 26 converts into compact transport protocol messages and compact markup language documents. The service program 26 then transmits the compact transport protocol messages and compact markup language documents to the handheld unit or units 16.

**Requests to the Service Handler API.** In an embodiment of the invention, each handheld unit 16 can send messages to an application program 22 via the service program 26. When the service program 26 receives a message, from a handheld unit 16, that is intended for one of the application programs 22, the service program 26 forms a "request" and calls the service handler API 23 that corresponds to the application program 22 that is the intended recipient of the message. In general, such requests to the service handler API 23 are formed using standard HTTP GET and POST syntax of the form:
(GET) | (POST) + SPACE + *resource_path* + SPACE + HTTP/*version* + CRLF
[ request-headers + CRLF]
CRLF
[ request-body ]

Request headers include:

| Header | Description | Example |
|---|---|---|
| Device-Address | MAC address (HEX) of the requesting device. | Device-Address: 32781ae3896cb366e |
| Request-ID | Identification of the request that should be returned in the response. Optional. | Request-ID:101 |
| Owner-ID | Owner identification. If an owner assignment exists for the device, the ID property is included in the request. | Owner-ID:123456789 |
| User-Agent | User agent. Describes the device and version. Optional. | User-Agent:wasabi/1.0 |
| Content-Length | Length of the request body. Omitted if no request body is present. | Content-Length: 102 |

Consider the example services URL used to get a list of files that an application program 22 has assigned for download to a handheld unit 16:
/*service_url*/GetFileList

The HTTP request might look like:
GET /*service_url*/GetFileList HTTP/1.1
Device-Address: 32781ae3896cb366e
Request-ID: 101
User-Agent: Wasabi/1.0

When an application program 22 responds to a request from the service program 26, it does so using HTTP syntax of the form:
HTTP/*version* + SPACE + *status_code* + SPACE + *response_status* + CRLF
[ response-headers + CRLF ]
CRLF
[ response-body ]

Response headers include:

| Header | Description | Example |
|---|---|---|
| Device-Address | MAC address (HEX) of the requesting device. | Device-Address: 32781ae3896cb366e |
| Request-URL | URL of request the response is intended for. | Request-URL: /ServiceHandler/64/Aut henticate |
| Request-ID | Identification of the request that is returned if included in the original response. Optional. | Request-ID:101 |
| Server | Identifies the application program providing the response. Optional. | Server:AccelTest/2.0 |
| Content-Length | Length of the response body. | Content-Length: 102 |

The response-body is enclosed in a <data> element and includes a <status> element whose contents provide a result code and optional message for the caller. This result code and message differs from the HTTP status code and response status, which relate to the success of locating and calling the service.

Example:
HTTP/1.1 200 OK
Device-Address: 32781ae3896cb366e
Request-URL: /ServiceHandler/64/Authenticate
Request-ID: 101
Server: AccelTest/1.0
Content-Length: 54

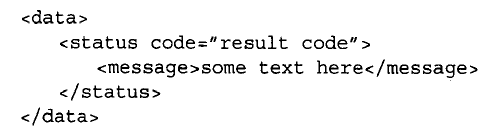

The <authenticate> element is returned when an application program 22 requires the user to identify themselves before a service can be successfully completed. On receiving this result, the handheld unit 16 will provide a general input field to input an alphanumeric id, which will be returned to service handler API of the application program 22.

Example:

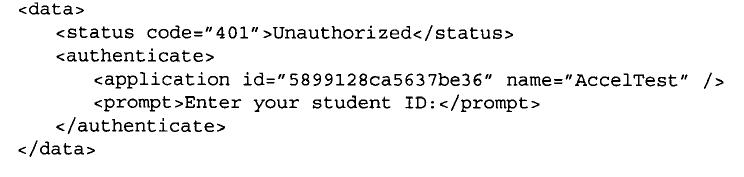

### Attributes

### admin = [true | false]

Authenticate administrator PIN instead of user key. False is default.

### no_keychain = [true | false]

If true, the device should not store the user's credentials for this authentication. False is default.

### Content

### application:id

ID of the application requesting authentication.

### application:name

Name of the application requesting authentication.

### <prompt>

A required element specifying the text prompt to display for login identification.

The following are examples of requests that are sent by the service program 26 to the application programs 22 via the service handler API 23 (in response to a handheld unit 16 invoking the request), and the responses to sent by the application programs 22 to the service program 26 (which are subsequently converted and transmitted to the handheld unit 16).

***Authenticate* request.** The *Authenticate* request is invoked by a handheld unit 16 (via the service program 26) that is responding to a request from an application program 22 to identify the user.

### Format of an Authenticate request

POST /*servjce_url*/Authenticate HTTP/1.1

| Parameter | Validation | Value |
|---|---|---|
| application/id | Not Null | The id of the application for which the device is requesting authentication. |
| key | Required for user authentication. Optional for admin authentication. | Authentication key for the user or administrator. |
| key/admin | Optional | True or false. True indicates the authentication is for the administrator PIN |
| key/validated | Optional. Required with admin attribute | True or false. True indicates the admin PIN the device supplied is valid. |

Example Request:
POST /ServiceHandler/64/Authenticate HTTP/1.1
Device-Address: 32781ae3896cb366e
Request-ID: 101
User-Agent: Wasabi/1.0
Content-Length: 58

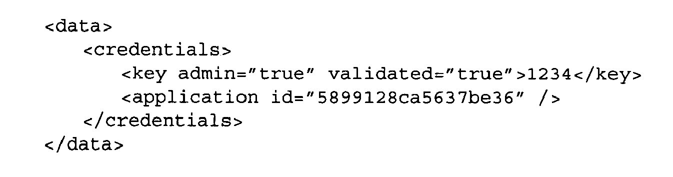

### Response to an Authenticate request

Example Response #1:
HTTP/1.1 200 OK
Device-Address: 32781ae3896cb366e
Request-URL: /ServiceHandler/64/Authenticate
Request-ID: 101
Content-Length: 33

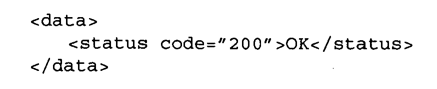

Example Response #2:
HTTP/1.1 200 OK
Device-Address: 32781ae3896cb366e
Request-URL: /ServiceHandler/64/Authenticate
Request-ID: 101
Content-Length: 78

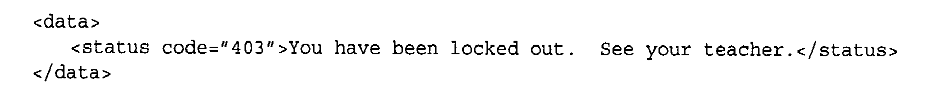

Status Codes for Service Program 26:

| Code | Description |
|---|---|
| 200 | OK |
| 401 | Unauthorized |
| 403 | Forbidden |
| 500 | Internal server failure |

HTTP Status Codes:

| Code | Description |
|---|---|
| 200 | OK |
| 400 | Bad request |
| 404 | Not found |
| 408 | Request timeout |
| 500 | Internal server failure |
| 503 | Service unavailable |

***GetLiveActivity* request.** The *GetLiveActivity* request is used to obtain the current live activity.

### Format of a GetLiveActivity Request

POST /*service_url*/GetLiveActivity HTTP/1.1

| Parameter | Validation | Value |
|---|---|---|
| activity:id | Optional | ID of the activity the responses are intended for. |
| application:id | Optional element; Required if response data is included. | GUID identifying the application server the response is intended for. |
| activity:submitted | Optional | Indicates activity has been submitted/completed by the user. Value is "true" or "false". "false" is the default. |
| response:actionid | Optional | Number ID of the action the response is intended for. |
| response:question | Optional | Number of question for which the response is intended |
| response:start_question | Optional | Starting question number for the range of responses being submitted. |
| response:end_question | Optional | Ending question number for the range of responses being submitted. |
| response/text() | Optional | Text of the response. For multiple question submission, responses are comma delimited. |
| navigation:question | Optional. Mutually exclusive with back and forward attributes. | Next question number the user has requested to view. |
| navigation:back | Optional. Mutually exclusive with question and forward attributes. | User requested to navigate backwards if value is "true" |
| navigation:forward | Optional. Mutually exclusive with question and back attributes. | User requested to navigate backwards if value is "true" |
| credentials | Optional. Included for inline authentication. | |

Example Request 1: Simple request.
POST /ServiceHandler/64/GetLiveActivity HTTP/1.1
Device-Address: 32781ae3896cb366e
Request-ID: 101
User-Agent: Wasabi/1.0

Example Request 2: Simple question response submission.
POST /ServiceHandler/64/GetLiveActivity HTTP/1.1
Device-Address: 32781ae3896cb366e
Request-ID: 101
User-Agent: Wasabi/1.0
Content-Length: 75

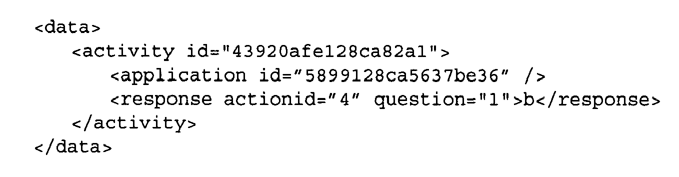

Example Request 3: Response submission with navigation option.
POST /ServiceHandler/64/GetLiveActivity HTTP/1.1
Device-Address: 32781ae3896cb366e
Request-ID: 101
User-Agent: Wasabi/1.0
Content-Length: 97

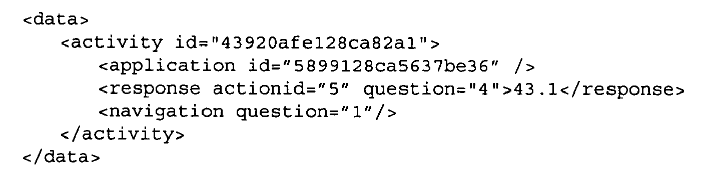

Example Request 4: Repeater question response submission.
POST /ServiceHandler/64/GetLiveActivity HTTP/1.1
Device-Address: 32781ae3896cb366e
Request-ID: 101
User-Agent: Wasabi/1.0
Content-Length: 142

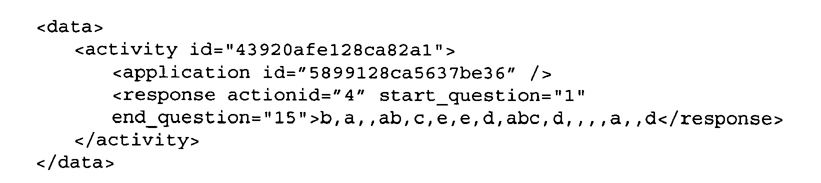

Example Request 5: Response submission with submit (completed).
POST /ServiceHandler/64/GetLiveActivity HTTP/1.1
Device-Address: 32781ae3896cb366e
Request-ID: 101
User-Agent: Wasabi/1.0
Content-Length: 97

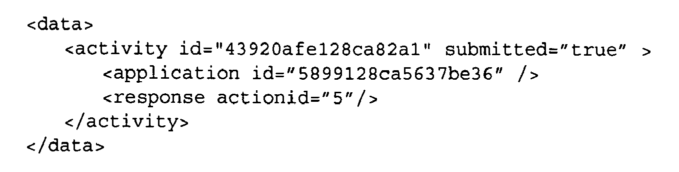

Example Request 6: Request with credentials
POST /ServiceHandler/64/GetLiveActivity HTTP/1.1
Device-Address: 32781ae3896cb366e
Request-ID: 101
User-Agent: Wasabi/1.0
Content-Length: 97

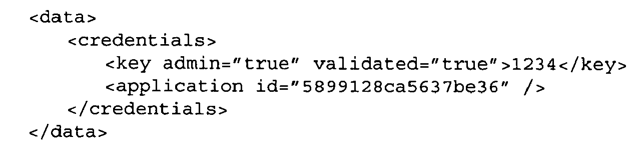

### Response to a GetLiveActivity request

HTTP/1.1 200 OK
Device-Address: 32781ae3896cb366e
Request-URL: /ServiceHandler/64/GetLiveActivity
Request-ID: 101
Content-Length: 390

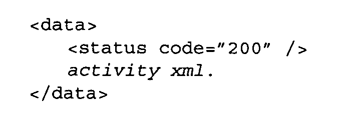

Status Codes for service program 26:

| Code | Description |
|---|---|
| 200 | OK |
| 401 | Unauthorized |
| 403 | Forbidden |
| 500 | Internal server failure |

HTTP Status Codes:

| Code | Description |
|---|---|
| 200 | OK |
| 400 | Bad request |
| 404 | Not found |
| 408 | Request timeout |
| 500 | Internal server failure |
| 503 | Service unavailable |

***GetFileList* request.** The *GetFileList* request is invoked when a handheld unit 16 requests an updated list of files it should download. Typically, these files include homework and notes.

### Format of a GetFileList Request

GET /*service_url*/GetFileList HTTP/1.1

| Parameter | Validation | Value |
|---|---|---|
| None. | | |

Example Request 1: Simple Request
GET /wasabi/GetFileList HTTP/1.1
Device-Address: 32781ae3896cb366e
Request-ID: 101
User-Agent: Wasabi/1.0

Example Request 2: Request with credentials
POST /ServiceHandler/64/GetFileList HTTP/1.1
Device-Address: 32781ae3896cb366e
Request-ID: 101
User-Agent: Wasabi/1.0
Content-Length: 97

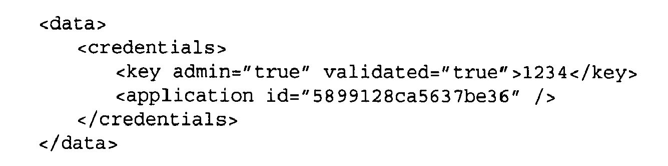

### Response to a GetFileList request

HTTP/1.1 200 OK
Device-Address: 32781ae3896cb366e
Request-ID: 101
Content-Length: 145

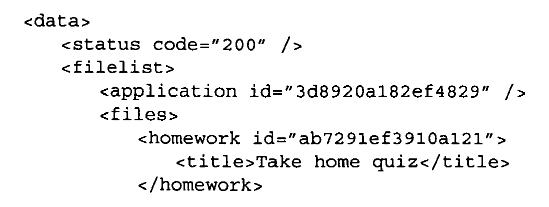

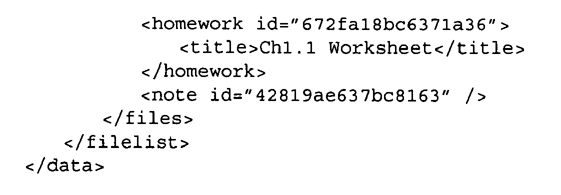

Status Codes for service program 26:

| Code | Description |
|---|---|
| 200 | OK |
| 401 | Unauthorized |
| 403 | Forbidden |
| 500 | Internal server failure |

HTTP Status Codes:

| Code | Description |
|---|---|
| 200 | OK |
| 400 | Bad request |
| 404 | Not found |
| 408 | Request timeout |
| 500 | Internal server failure |
| 503 | Service unavailable |

***GetFile* request.** The *GetFile* request is invoked when a handheld unit 16 requests a file to download.

### Format of a GetFile Request

POST /*service_url*/GetFile HTTP/1.1

| Parameter | Validation | Value |
|---|---|---|
| application/id | Not Null | The guid identifying the application. |
| file/id | Not Null | The guid identifying the homework file. |

Example Request:
POST /Wasabi/GetFile HTTP/1.1
Device-Address: 32781ae3896cb366e
Request-ID: 101
User-Agent: Wasabi/1.0
Content-Length: 64

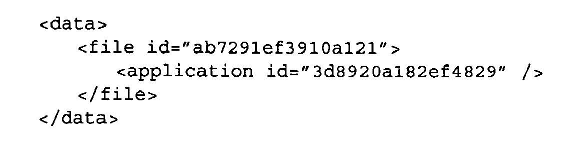

### Response to a GetFile request

HTTP/1.1 200 OK
Device-Address: 32781ae3896cb366e
Request-ID: 101
Content-Length: 612

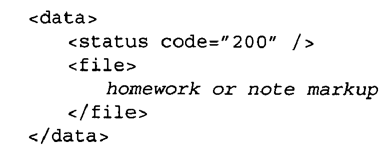

Status Codes for service program 26:

| Code | Description |
|---|---|
| 200 | OK |
| 401 | Unauthorized |
| 500 | Internal server failure |
| 516 | File not found |

HTTP Status Codes:

| Code | Description |
|---|---|
| 200 | OK |
| 400 | Bad request |
| 404 | Not found |
| 408 | Request timeout |
| 500 | Internal server failure |
| 503 | Service unavailable |

***ConfirmGetFile* request.** The *ConfirmGetFile* request is invoked to confirm that the handheld unit 16 received the specified file.

### Format of a ConfirmGetFile Request

POST /*service_url*/ConfirmGetFile HTTP/1.1

| Parameter | Validation | Value |
|---|---|---|
| application/id | Not Null | The guid identifying the application. |
| *filetype*/id | Not Null | The ID identifying the file. Filetype is either note or homework. |

Example Request:
POST /Wasabi/ConfirmGetFile HTTP/1.1
Device-Address: 32781ae3896cb366e
Request-ID: 101
User-Agent: Wasabi/1.0
Content-Length: 64

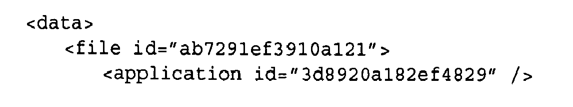

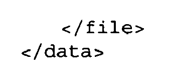

### Response to a ConfirmGetFile request

HTTP/1.1 200 OK
Device-Address: 32781ae3896cb366e
Request-ID: 101
Content-Length: 33

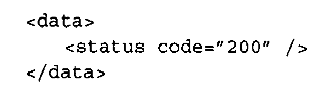

Status Codes for service program 26:

| Code | Description |
|---|---|
| 200 | OK |
| 401 | Unauthorized |
| 500 | Internal server failure |
| 516 | File not found |

HTTP Status Codes:

| Code | Description |
|---|---|
| 200 | OK |
| 400 | Bad request |
| 404 | Not found |
| 408 | Request timeout |
| 500 | Internal server failure |
| 503 | Service unavailable |

***PutFile* request.** The *PutFile* request is invoked when a handheld unit 16 requests to upload a file to the application program 22.

### Format of a PutFile request

POST /*service_url*/Putfile HTTP/1.1

| Parameter | Validation | Value |
|---|---|---|
| application/id | Not Null | The guid identifying the application. |
| homework/id | Not Null | The ID identifying the file. |
| homework file data | Not Null | File data. |

Example Request:
POST /Wasabi/Putfile HTTP/1.1
Device-Address: 32781ae3896cb366e
Request-ID: 101
User-Agent: Wasabi/1.0
Content-Length: 143

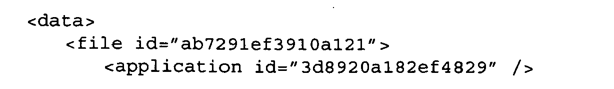

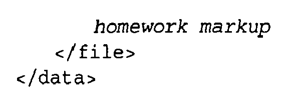

### Response to a PutFile request

HTTP/1.1 200 OK
Device-Address: 32781ae3896cb366e
Request-ID: 101
Content-Length: 33

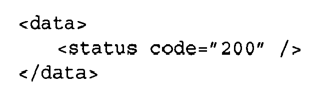

Status Codes for service program 26:

| Code | Description |
|---|---|
| 200 | OK |
| 401 | Unauthorized |
| 500 | Internal server failure |
| 516 | File not found |
| 517 | Disk full |

HTTP Status Codes:

| Code | Description |
|---|---|
| 200 | OK |
| 400 | Bad request |
| 404 | Not found |
| 408 | Request timeout |
| 500 | Internal server failure |
| 503 | Service unavailable |
| 516 | File not found |
| 517 | Disk full |

According to an embodiment of the invention, when a "live" activity is in progress, the application program 22 acts as a web server providing one or more compact mark-up language documents representing the live activity to the handheld units 16, which act as a browsers. Each handheld unit displays information on the LCD screen 32 as specified by the compact mark-up language document. The compact mark-up language document also dictates how the user may navigate, input responses, and what prompts the user receives. The application program 22 provides this live activity "page" to the service program 26 when the service program 26 sends a *GetLiveActivity* request to the application program 22 (in response to a corresponding request from a handheld unit 16). Below is a sample request-response loop demonstrating a simple live activity session:

Request from service program 26 (initiated by student's handheld unit 16):
POST /GetLiveActivity HTTP/1.1
Device-Address: 32781ae3896cb366e
Request-ID: 101
User-Agent: Wasabi/1.0

Response from application program 22:
HTTP/1.1 200 OK
Content-Length: 789

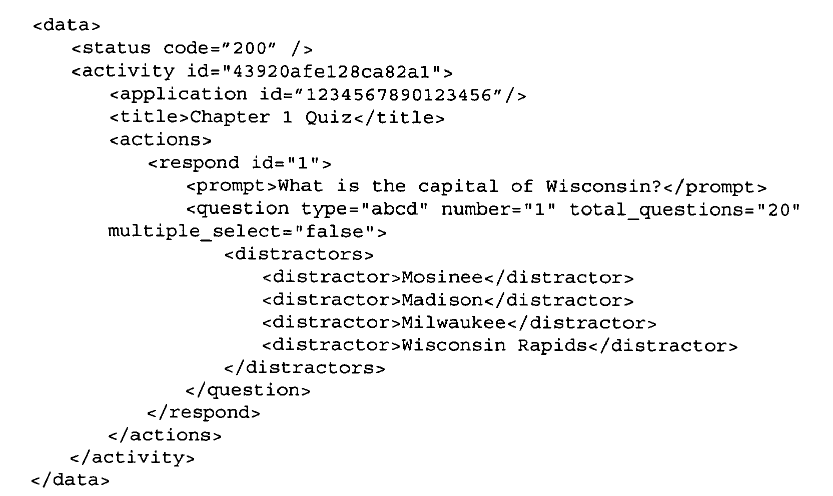

The service program 26 converts the XML into a compact markup language document and transmits it to the handheld unit 16. The handheld unit 16 displays the question to the student. When the student responds to the question, the handheld unit 16 will again initiate a *GetLiveActivity* request, this time providing data in the query parameters which identify the activity, the question, and the user's response. The following example shows the request that the gets passed from the service program 26 to an application program 22 in response to the service program 26 receiving a corresponding request from the handheld unit 16:
POST /Wasabi/GetLiveActivity HTTP/1.1
Device-Address: 32781ae3896cb366e
Request-ID: 101
User-Agent: Wasabi/1.0
Content-Length: 64

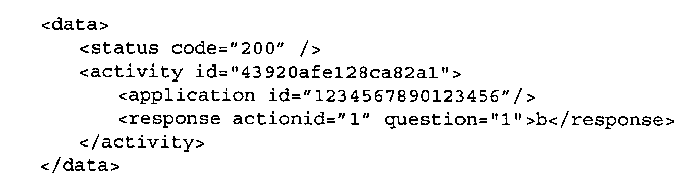

The application program 22's response to this request can be dynamic based on the activity, the action, and the response to the question.

The following sections discuss the elements of an activity document and the different action types that can be used by the application program 22 to create the live and homework style activities. Although the example activity documents are implemented in XML, any markup language may be used.

As previously discussed, the activity document is the content that the application program 22 provides via the service handler API 23 when it receives a *GetLiveActivity* request. An activity document includes a single <activity> element that itself can contain zero or more action elements. Action elements direct the user experience for the handheld unit 16. The following is an example of an activity document that uses the <activity> element:

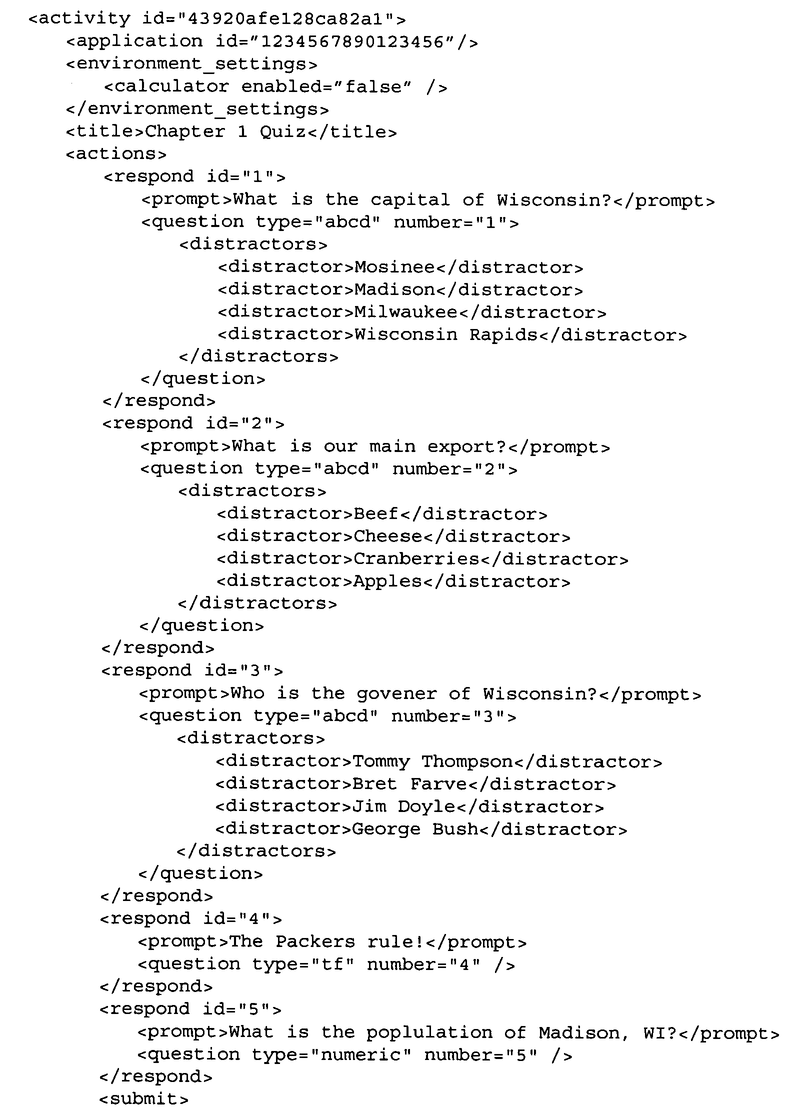

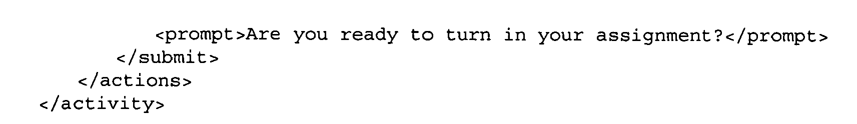

In above example, the activity includes 5 actions to gather responses from the student and 1 action to handle submission of the work when the student reaches the end of the quiz.

The following sections describe the elements of an activity document according to an embodiment of the invention, including optional elements for controlling device settings and user navigation. The following sections also describe the format of the corresponding compact markup language documents that are transmitted to the handheld units 16.

**The <activity> element.** The <activity> element forms the root of the activity document.

Example:

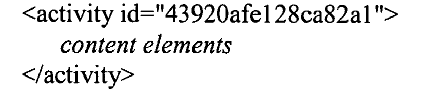

If the application program 22 has no live activity to provide to the requesting device, the null activity should be returned using the empty element form <activity />.

### Attributes

### id

An optional attribute that the application program 22 can supply to uniquely identify the activity.

### submitted=" [true | false]"

An optional attribute used in live activities to indicate the activity is submitted as complete. Default is false.

### Content

### <application>

A required element that identifies the application the activity was served from.

### <environment_settings>

An optional element that specifies what device settings are in effect during the activity. Settings allow utilities such as the calculator to be turned on or off as dictated by the teacher.

### <title>

A required element that provides a human readable name for the activity. Examples include: Chapter 4 Quiz, Customer Survey, Math Assessment.

### <actions>

An optional element which includes sub elements defining the action or actions that the handheld unit 16 should perform for the activity.

### <navigation>

An optional element defines the back, forward, and indexed navigation the user can perform for the activity.

### COMPACT MARKUP LANGUAGE

| Item | Description | Usage |
|---|---|---|
| act | Activity element | |
| act\i | Activity id attribute | |
| Act\sub | Submitted attribute | \sub0 = do not submit \sub1 = submit as completed |

Example

{act\i 1234567890123456{t\ Chapter 1 Quiz}}

**The <application> element.** The <application> element identifies the application program that served the activity.

Example:

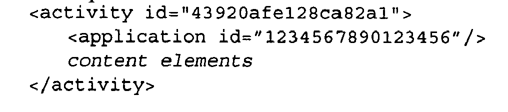

### Attributes

### id

A required attribute that identifies the application program 22. The value is required to be a unique GUID in 32 character ascii-hex.

### name

An optional attribute that identifies the application name that served the activity.

### COMPACT MARKUP LANGUAGE

| Item | Description | Usage |
|---|---|---|
| app | Application element | |
| app\i | Application id attribute | Unique GUID; required |
| app\n | Application name | Optional |

Example

{app\i 1234567890123456\n AccelTest}

**The <environment settings> element.** The <environment_settings> element contains sub elements that specify the device environment settings for the activity.

Example:
<environment_settings >
*content elements*
</environment_settings>

### Attributes

None.

### Content

### <calculator>

An optional element that specifies whether the calculator is to be enabled or disabled during the activity.

### COMPACT MARKUP LANGUAGE

| Item | Description | Usage |
|---|---|---|
| evs | Environment settings element | |

Example
(act\i 1234567890123456{evs{calc\e}}}

**The <calculator> element.** The <calculator> element is a sub element of the <environment_settings> element and specifies whether the calculator is available during an activity. If this element is not provided, the calculator is enabled by default.

Example:
<calculator enabled="true" />

### Attributes

### enabled=" [true | false]"

A required attribute specifying the enabled state of the calculator utility on the Wasabi. Default value is true.

### Content

None.

### COMPACT MARKUP LANGUAGE

| Item | Description | Usage |
|---|---|---|
| calc | calculator element | |
| \e | Enabled attribute | If present, calculator is enabled. |

Example
{act\i 1234567890123456{evs{calc\e}}}

**The <title> element.** The <title> element is a sub element of the <activity> element and specifies the title of the activity.

Example:
<title>Chapter 4 Quiz</title>

### Attributes

None.

### Content

Text.

### COMPACT MARKUP LANGUAGE

| Item | Description | Usage |
|---|---|---|
| t | title element | |

Example
{act\i 1234567890123456{t\ Chapter 1 Quiz}}

**The <navigation> element.** The <navigation> element is a sub element of the <activity> element and specifies settings for user navigation using the keypad and menu system of the handheld unit 16.

Example:
<navigation back="false" forward="true" first_question="1"
last_question="20" />

### Attributes

### back=" [true | false]"

An optional attribute specifying the user can navigate backwards in an activity.

Defaults to false.

### forward=" [true || false]"

An optional attribute specifying the user can navigate forwards in an activity.

Defaults to false.

### first_question

An optional attribute specifying the number of the first question the user can navigate to using the indexed navigation UI of the handheld unit 16. If omitted or 0, indexed navigation is disabled. Value is limited from 0 to 999.

### last_question

An optional attribute specifying the number of the last question the user can navigate to using the indexed navigation UI of the handheld unit 16. If omitted or 0, indexed navigation is disabled. Value is limited from 0 to 999.

### Content

None.

### COMPACT MARKUP LANGUAGE

| Item | Description | Usage |
|---|---|---|
| nv | navigation element | |
| \b | back attribute | If present, backward navigation is supported. |
| \f | forward attribute | If present, forward navigation is supported. |
| \s | First question attribute | Specifies starting question number |
| \e | Last question attribute | Specified ending question number |

Example
{nv\b\f\s1\e25}

**The <actions> element.** The <actions> element is a sub element of the <activity> element and is used to specify the actions for the activity.

### Attributes

None.

### Content

Allowed elements include: <respond>, <takenote>, <message>, <submit>, <continue>

**The <respond> element.** The <respond> element is an action sub element of the <actions> element used to direct the handheld unit 16 to display a question prompt and then collect an input response from the student.

Example:

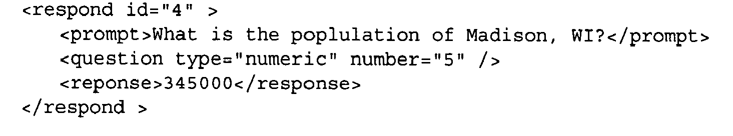

### Attributes

### id

An optional attribute used to identify the action. The id of the action is passed back to the application program 22 on the next call to *GetLiveActivity.* The id may be used to help manage state and session in the application program 22 in a complex sequence activity. The value of this attribute must be a numeric from 0 to 9999.

### Content

### <prompt>

An optional element specifying the text prompt to display.

### <question>

An optional element specifying the type of response desired.

### <response>

An optional element specifying a response that was recorded previously.

### COMPACT MARKUP LANGUAGE

| Item | Description | Usage |
|---|---|---|
| r | Respond element | |
| \i | ID attribute | Action id |
| rs | Response element | |

Example
{r\i2{p\ Saturn is the __ planet from the sun.}{q\t n}}

**The <message> element.** The <message> element is an action sub element of the <actions> element used to direct the handheld unit 16 to display a prompt and then wait for a keypad press from the student.

Example:

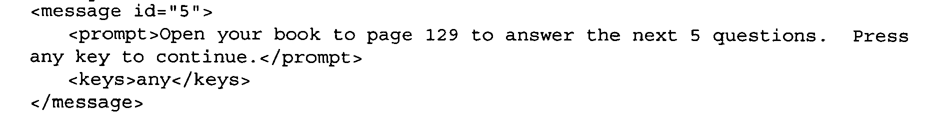

### Attributes

### id

An optional attribute used to identify the action. The id of the action is passed back to the application program 22 on the next call to *GetLiveActivity.* The id may be used to help manage state and session in the application program 22 in a complex sequence activity. The value of this attribute is a numeric from 0 to 9999.

### Content

### <prompt>

A required element specifying the message prompt to display.

### <keys>

An optional element specifying keypad buttons that will dismiss the message and advance the user to the next activity action.

### COMPACT MARKUP LANGUAGE

| Item | Description | Usage |
|---|---|---|
| m | Message element | |
| \i | ID attribute | Action id |

Example
{m\i6{p\ Do you wish to continue?}{k\ y,n}}

**The <takenote> element.** The <takenote> element is an action sub element of the <actions> element used to direct the handheld unit 16 to display a note and then wait for the user to accept or reject the note.

Example:

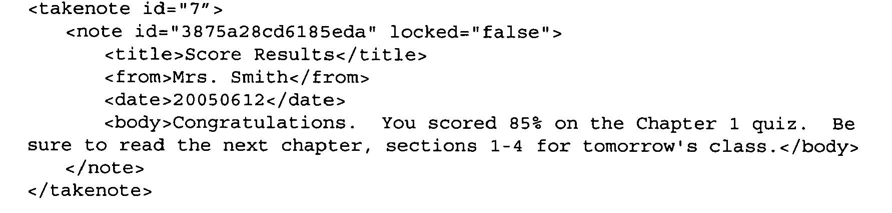

### Attributes

### id

An optional attribute used to identify the action. The id of the action is passed back to the application program 22 on the next call to *GetLiveActivity.* The id may be used to help manage state and session in the application program 22 in a complex sequence activity. The value of this attribute is a numeric from 0 to 9999.

### Content

### <note>

A standard note file element.

### COMPACT MARKUP LANGUAGE

| Item | Description | Usage |
|---|---|---|
| tn | takenote element | |
| \i | ID attribute | Action id |
| no | Note element | |
| no\i | Note ID attribute | Required |
| no\l | Note locked attribute | If present, not is locked. |
| t | Title element | Optional |
| fr | From element | Optional |
| dt | Date element | Optional |
| bd | Body element | Required |

Example
{tn\i8{no\i 1234\1(t\ Score Results} {fr\ Mrs. Smith} {dt\ 20050015} {bd\ Congratulations. You scored 85% on the quiz. Be sure to read the next chapter, sections 1-4 for tomorrow's class.}}}

**The <submit> element.** The <submit> element is an action sub element of the <actions> element used to direct the handheld unit 16 to display a prompt asking the user if the activity is completed and ready to be turned in. This element is typically used when the student has responded to the last question in a live student paced activity or a homework activity. The handheld unit 16 will display the prompt and expect to collect a Yes or No response.

Examples:

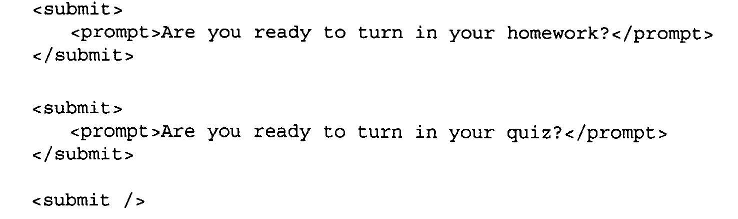

### Content

### <prompt>

An optional element specifying the text prompt to display. If omitted, a standard prompt on the device is used.

### COMPACT MARKUP LANGUAGE

| Item | Description | Usage |
|---|---|---|
| sb | submit element | |
| p | prompt element | |

Example
{sb{p\ Are you ready to turn in your assignment?}}

**The <continue> element.** The <continue> element is an action sub element of the <actions> element used to direct the handheld unit 16 to allow the user to continue with the next action in an activity sequence.

Example:
<continue />

### Attributes

None.

### Content

None.

### COMPACT MARKUP LANGUAGE

| Item | Description | Usage |
|---|---|---|
| con | Continue element | |

Example
{act\i 1234{con}}

**The <prompt> element.** The <prompt> element is a sub element of the <respond>, <message>, and <submit> elements and specifies the text that will be displayed to the user of the handheld unit 16.

Examples:
<prompt>What is the capital of Wisconsin?</prompt>
<prompt>Turn to page 140 in your Math textbook and answer the following multiple choice questions.</prompt>
<prompt>Have you finished the quiz?</prompt>

### Attributes

None.

### Content

Text.

### COMPACT MARKUP LANGUAGE

| Item | Description | Usage |
|---|---|---|
| P | prompt element | |

Example
{r\i2{p\ Saturn is the __ planet from the sun.}{q\t n}}

**The <keys> element.** The <keys> element is a sub element of the <message> action element and is used to specify what keypad buttons will advance the user to the next activity action. If omitted, then any key will dismiss the message.

Examples:
<keys>any</keys>
<keys>ent</keys>
<keys>a,b,c,d,e,tru,fal,ent</keys>

### Attributes

None.

### Content

A comma delimited string of keypad buttons. Valid values are listed in the table below.

| Key Description | Key Code |
|---|---|
| A | a |
| B | b |
| c | c |
| D | d |
| E | e |
| 0 | 0 |
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| Enter | ent |
| Clear | clr |
| Menu | mnu |
| Select | sel |
| Up Arrow | up |
| Down Arrow | dwn |
| Period/Decimal Point | . |
| Plus/Minus | +- |
| True | tru |
| False | fal |
| Yes | yes |
| No | no |
| Question Mark | ? |

### COMPACT MARKUP LANGUAGE

| Item | Description | Usage |
|---|---|---|
| k | Keys element | Valid values include are listed in table 3-1. |

**Example**
{m\i6{p\ Do you wish to continue?}{k\ yes,no}}

**The <question> element.** The <question> element is a sub element of the <respond> action element and is used to specify what keypad buttons are valid for collecting a response from the user and other properties specific to the type of response being requested.

Example 1: A multiple choice question with one correct answer.

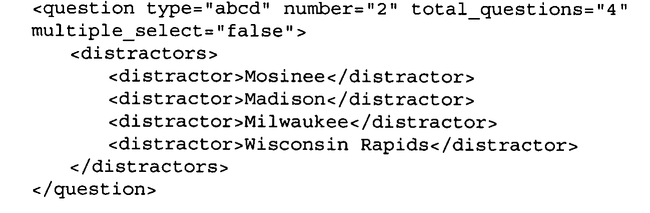

Example 2: A true/false question.
<question type="tf" number="2" total_questions="4" />

Example 3: A numeric question.
<question type="numeric" number="2" total_questions="4" />

Example 4: A multiple choice repeater question. Used for scan card style activities.
<question type="abcd" start_number="1" end_number="50" total_questions="50" multiple_select="true" alternate_distractors="true" />

### Attributes

### type

An optional attribute specifying the allowed response type. Valid values include: ab, abc, abcd, abcde, fg, fgh, fghj, fghjk, tf, yn, numeric, free, none.

### number

An optional attribute specifying the question number. This number is sent back to the application program 22 when a response is submitted by the user. Value is from 0 to 999.

### start_number

An optional attribute specifying the starting question number of a repeater question. Not valid to use with number attribute. Requires use of end_number attribute.

### end_number

An optional attribute specifying the ending question number of a repeater question. Not valid to use with number attribute. Requires use of start_number attribute.

### total_questions

An optional attribute specifying the total number of questions in the activity. Together with the number attribute, the handheld unit 16 will use this information when displaying the question on the screen to the user as shown, for example, in FIG. 8. Note that on the upper right of the screen (reference number 82) shows the total number of questions (e.g., "2 of 4").

### multiple_select=[true | false]

An optional attribute specifying the user can enter more than one answer for a question of type: ab, abc, abcd, abcde.
Default value is false.

### alternate_distractors=[true | false]

An optional attribute for repeater questions that specifies the use of alternating distractors labels for even numbered questions. For example, a question of type "abcde" will use "fghjk" labels for even questions and "abcde" labels for odd numbered questions. Default value is false. Not valid to use with number attribute. Requires use of start_number and end_number attributes.

### Content

### <distractors>

An optional element valid only when the question type is set to one of the following values: ab, abc, abcd, abcde. Distractors are labels defined by the application program 22 to display to the user when asking a multiple-choice question.

### COMPACT MARKUP LANGUAGE

| Item | Description | Usage |
|---|---|---|
| q | question element | |
| \t | type attribute | Required. Valid values include: b, c, d, e, g, h, j, k for multiple choice, n for numeric, y for yes/no, t for true/false, and fr for free response. |
| \i | number attribute | |
| \si | start_number attribute | |
| \ei | end_number attribute | |
| \n | total_questions attribute | |
| \ms | multiple_select attribute | If present, multiple select is enabled. |
| \a | alternate_distractors attribute | If present, alternate distractor labels are enabled. |

Example 1
{r\i2{p\ Saturn is the __ planet from the sun.}{q\i2\n10\t n}}

Example 2. A 50 question multiple choice repeater.
{r\i2{q\si1\ei50\n10\t e\ms\a}}

**The <distractors> element.** The <distractors> element is a sub element of the <question> element and is used to specify the multiple choice distractor elements.

Example 1: A multiple choice question with one correct answer.

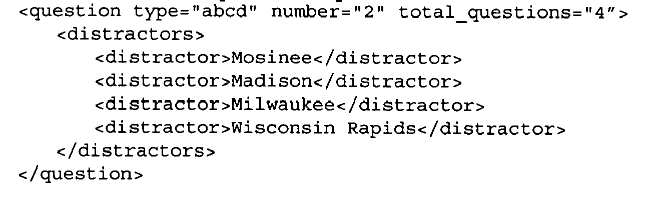

### Attributes

None.

### Content

### <distractor>

A required element which specifies the text of a multiple-choice answer.

**The <distractor> element.** The <distractor> element is a sub element of the <distractors> element and is used to specify the text of a multiple choice answer.

Example:
<distractor>Mosinee</distractor>

### Attributes

None.

### Content

Text.

### COMPACT MARKUP LANGUAGE

| Item | Description | Usage |
|---|---|---|
| d | distractor element | |

Example
{r\i2{p\ Which planet is the sixth planet from the Sun?}{q\i2\n10\t d{d\ Mars}{\d Jupiter}{\d Saturn}{\d Venus}}}

Homework is a special type of student-paced activity in which the activity is downloaded to the handheld unit 16 and completed offline. A live connection to the wireless network 24 and the application program 22 is not required for a student to engage in a homework activity. Since the activity is completed offline, the application program 22 generally does not intervene to control the pace and flow of homework activity. Thus, homework activities are generally static activities. Homework is not classified as "live" as are teacher and student-paced activities.

Completing a homework activity involves the student responding to the questions in the activity and marking the activity complete. To allow the application program 22 to collect homework, the student connects to the wireless network 24 using her handheld unit 16 and updates the application program 22. During the update, answers to the homework activity questions are uploaded to the application program 22's service handler API 23.

In an embodiment of the invention, a handheld unit 16 homework activity can be "locked" when it is created by the application program 22. A locked homework activity cannot be deleted explicitly by the user of the handheld unit 16. It can only be deleted by the teacher using the application program 22 or by submitting it as completed. Locked homework activities are typically used when a teacher wants to make sure a student does not delete the assignment (either mistakenly or purposefully).

A homework document is a markup language document, such as an XML document. The application program 22 may provide a homework document to a handheld unit 16 via the service handler API 23 and the service program 26 when the handheld unit 16 submits a *GetFile* request. The homework document is similar to the activity document, with a few small differences. A homework document includes at least one <homework> element. The <homework> element has one required attribute, "id" and one optional attribute, "locked." The "id" attribute identifies the homework activity. Each homework activity the application program 22 creates should be assigned a unique identifier. This identifier is used to track the note file from creation to deletion. A GUID is typically used, although any id that is unique to the handheld unit 16 user is sufficient. The "locked" attribute can have a value of true or false, and indicates whether or not the homework activity is locked. Homework activities that are "locked" cannot be deleted by the handheld unit 16 user. The default value for the locked attribute is false. The <homework> element includes the optional elements <sender>, <assign_date> and <due_date>. The <sender> element specifies the name of the person that assigned the activity. The <assign_date> element specifies the date the activity was assigned. The date format is CCYYMMDD. The <due_date> element specifies the date the activity is due. The date format is CCYYMMDD.

The following is an example of a homework document

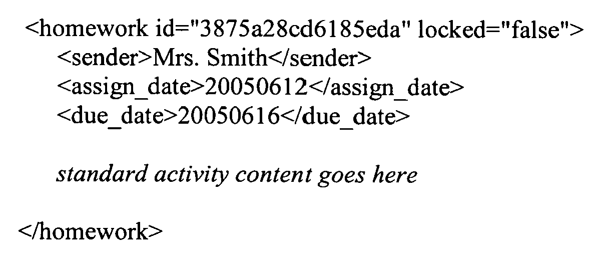

### Attributes

### id

A required attribute used to identify the homework activity. Each homework activity the application program 22 creates should be assigned a unique identifier. This id is used to track the homework from creation to deletion. A GUID is typically used although any id that is unique to the Wasabi user is sufficient.

### locked=[true | false]

An optional attribute indicating the lock state of the homework activity. Homework activities that are "locked" cannot be deleted by the user of the handheld unit 16. Default value is false.

### Content

### <application>

A required element that identifies the application the homework was served from.

### <from>

An optional text element specifying the name of the person that assigned the activity.

### <assign_date>

An optional element specifying the date the activity was assigned. Date format is CCYYMMDD.

### <due_date>

An optional element specifying the date the activity is due. Date format is CCYYMMDD.

**Homework response document.** A completed homework document is a markup language document that the application program 22 receives via the service handler API 23 when *PutFile* is invoked by a handheld unit 16 to submit completed homework. The document defines the responses entered by the student for the homework activity.

Example #1:

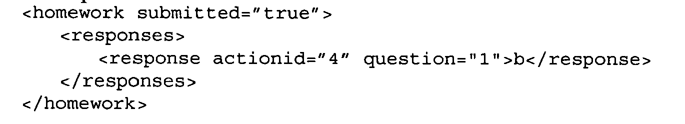

### Attributes

### submitted

A flag indicating the student marked the homework activity as completed. If false, the student has not yet completed the homework.

### Content

### <response>

A element identifying a response to an activity action.

### actionid

ID of the action

### question

An optional attribute identifying the question number.

If the application program 22 supports homework, then it may also provide features to create homework. If the application 22 supports "locked" homework, then the application program 22 may also include features to delete locked homework that is never turned in by the student.

When a handheld unit 16 submits a *GetFileList* request via the service program 26 and the service handler API 23, the application program 22's response should include in the list any homework it wants downloaded to the requesting handheld unit 16. The homework files themselves are then provided by the application program 22 when the handheld unit 16 submits a *GetFile* request via the service handler program 26.

When a homework activity is successfully downloaded to the handheld unit 16, the handheld unit 16 will submit a *ConfirmGetFile* request to the application program 22 using the id of the homework activity the application program 22 assigned.

When the student completes the homework activity, she will use the handheld unit 16 user interface to mark it complete and ready for submission. Homework that is completed will be uploaded to the application program 22 using the *PutFile* request.

Typically submitted homework will be deleted from the user's file list after the homework file is successfully uploaded with the *PutFile* request. After each *PutFile* invocation, the handheld unit 16 will submit a *GetFileList* request to confirm the file was received and removed from the homework list. If the handheld unit 16 finds the file has been removed from the list, it will delete it from its own internal memory.

If the handheld unit 16 finds, in its internal memory, homework that came from the application program 22 but is no longer reported in the application program 22's file list, then the handheld unit 16 will attempt to delete the file or files for the homework from its internal memory. This may occur, for example, when a teacher or the application program 22 deletes the homework prior to a student's submission.

As previously discussed, one type of document that can be transmitted between a handheld unit and an application program 22 is a "note." In an embodiment of the invention, a note is simple text message of up to 255 characters that an application program 22 can create for a handheld unit 16 user to download and view. The intended usage of notes in handheld unit 16 in one embodiment is for instructions for homework activities and sending messages to parents and guardians. A note can be "locked" when it is created by the application program 22. A locked note cannot be deleted by the handheld unit 16 user. It can only be deleted by the teacher using the application program 22. Locked notes are typically used when a teacher wants to make sure a note was read by a parent and not deleted by the student.

A note may be defined by a markup language document, such as an XML document, that the application program 22 provides to a handheld unit 16 when a *GetFile* request is submitted by the handheld unit 16. A note document has at least one <note> element. The <note> element has an "id" attribute, and may optionally have a "locked" attribute. The "id" attribute is used to identify the note. Each note the application program 22 creates should be assigned a unique identifier. This identifier is used to track the note from creation to deletion. A GUID is typically used although any id that is unique to the handheld unit 16 user is sufficient. The "locked" attribute can have a value of true or false, and indicates whether or not the note is locked. Notes that are "locked" cannot be deleted by the handheld unit 16 user. The default value for the locked attribute is false. The <note> element includes the optional elements <title>, <sender>, and <date>. The <title> element contains text that specifies the title of the note. The <sender> element contains text that specifies the name of the person that assigned the activity. The <date> element contains text that specifies the date the note was created. The date format is CCYYMMDD. The <note> element also includes the required element <body>, which specifies the content of the note. The text content of the <body> element supports use of the <br/> element to control line breaks.

Examples of how the <homework> element is used are as follows:

Example #1:

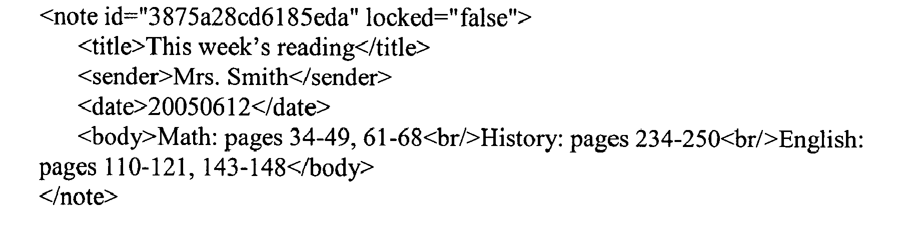

Example #2:

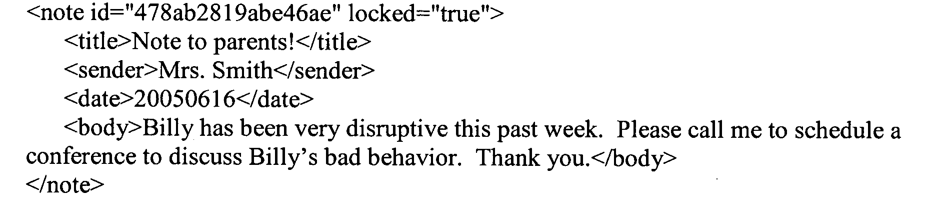

### Attributes

### id

A required attribute used to identify the note. Each note an application program 22 creates should be assigned a unique identifier. This id is used to track the note from creation to deletion. A GUID is typically used although any id that is unique to the user of the handheld unit 16 is sufficient.

### locked=[true | false]

An optional attribute indicating the lock state of the note. Notes that are "locked" cannot be deleted by the user of the handheld unit 16. Default value is false.

### Content

### <application>

A required element that identifies the application program 22.

### <title>

An optional text element specifying the title of the note.

### <sender>

An optional text element specifying the name of the person that sent the note.

### <date>

An optional element specifying the date the note was created. Date format is CCYYMMDD.

### <body>

A required text element specifying the content of the note. The text content of this element supports use of the <br/> element to control line breaks.

If the application program 22 supports notes, it should provide features to create notes. If the application program 22 supports "locked" notes, then the application program 22 should include features to delete the locked notes.

When a handheld unit 16 submits a *GetFileList* request, the application program 22's response should include any notes it wants downloaded to the requesting handheld unit 16. Note files will then be transmitted by the application program 22 to the handheld unit 16.

When a note is successfully sent to the handheld unit 16, the handheld unit 16 will call the *ConfirmGetFile* API via the responder port 23 with the id of the note the application program 22 assigned. Upon receiving this confirmation, the application program 22 will delete the transmitted note unless it is "locked."

**Communication between the Service Program 26 and the Handheld Units 16.** According to an embodiment of the invention, the service program 26 (FIG. 1) communicates with the handheld units 16 using a compact transport protocol and compact markup language documents. As with the communication between the service program 26 and the application programs 22, the communication between the service program 26 and the handheld units 16 takes the form of a requests and responses. The format of these requests and responses, as well as the structure of the compact transport protocol, will now be described. The compact transport protocol will sometimes be referred to herein as SDTP.

**Requests.** To request a service, a handheld unit 16 constructs a service payload using the compact transport protocol syntax. Next, datagram fragments are created as needed with the "Service" field set to 0x40. These datagrams are then transmitted to a personal area network (PAN) coordinator (such as the base station 11) using MAC data frames.

Service request payloads are formed using syntax of the form:
SDTP/*version* + SPACE + *service_resource_path* + CRLF
[ request-header + CRLF]
CRLF
[ *request-body* ]

Message headers for request include:

| Header | Description | Example |
|---|---|---|
| ri | Identification of the request that is returned in the response. Optional. | ri:100 |
| ua | User agent. Describes the device and version. Optional. | ua:wasabi/1.0 |
| cl | Content length. | cl:23 |

Example Request:
SDTP/1.0 /aown
ri:100
ua:wasabi/1.0

**Responses.** When the service program 26 responds to a request from a handheld unit 16, the responses are collected using the MAC data request command. Datagram fragments are then broadcast from the PAN coordinator. The handheld unit 16 receives the fragments and assembles them to extract the service response payload.

Service responses are returned in the syntax of the form:
SDTP/*version* + SPACE + status_code + SPACE + status_message + CRLF
[ response-header + CRLF ]
CRLF
[ response-body ]

Message headers for response include:

| Header | Description | Example |
|---|---|---|
| ru | Identifies the URL of the request the response is intended for. | ru:/asown |
| ri | Identification of the request that response is intended for. Required when request initially specified an id. | ri:100 |
| sv | Server. Describes the server and version fulfilling the request. Optional. | sv:AccelTest/2.4 |
| cl | Content length. | cl:23 |

Example Response:
SDTP/1.0 200 OK
ru:/auth
ri:100

**User Authentication.** If the status code returned for any response is a 401 (Unauthorized) code, the user must authenticate itself for the requested service. A response with this status code has the following forms:

Example 1: User Authentication
SDTP/1.0 401 Unauthorized
ru:/act
ri:101
{auth{app\i 5899128ca5637be36\n AccelTest}{p\ Enter your student ID:}}

Example 2: Administrator PIN Authentication
SDTP/1.0 401 Unauthorized
ru:/act
ri:101
{auth\a{app\i 5899128ca5637be36\n AccelTest}{p\ Enter the administrator PIN:}}

| Parameter | Validation | Value |
|---|---|---|
| auth | Required element | |
| a | Optional attribute | If present, user is required to supply the administrator PIN. |
| nk | Optional attribute | If present, the device should not store the user credentials in the key chain. |
| app | Required element | |
| app\i | Required attribute | Application GUID |
| app\n | Optional attribute | Application Name |
| p | Required element | Prompt to display to user |

On receipt of this response, a device with a keychain key for the application can automatically submit the authorization request. If a keychain entry is not found, the device will use the prompt to collect the authorization key.

### Request

To authenticate a user, the following service request is used:
SDTP/1.0 /auth
{kc\k *application_key*(app\i *application_id*}}

| Parameter | Validation | Value |
|---|---|---|
| kc | Key chain element; required | Key supplied by user or device. |
| kc\a | Optional attribute | If present, key is for administrator authentication. |
| kc\k | Key chain key attribute; required | User or device supplied credentials for application authentication. |
| app | Application element; required | |
| app/i | Application id attribute; required | GUID of the application service handler the key is intended for. |

Example 1: User Authentication
SDTP/1.0 /auth
ri:101
cl:31
{kc\k 101{app\i 3d8920a182ef4829}}

Example 2: Administrator PIN Authentication
SDTP/1.0 /auth
ri:101
cl:31
{kc\a\k 101{app\i 3d8920a182ef4829}}

### Response

SDTP/1.0 200 OK
ru:/auth
ri:101

Result Codes:

| Code | Description |
|---|---|
| 200 | OK |
| 401 | Unauthorized |
| 500 | Internal server failure |
| 503 | Service unavailable |

**Activity.** Returns the current live activity.

### Request

SDTP/1.0 /act
ri:100
cl:61
{act\i activityid {app\i *application_id*}{r\i *actionid\*q *questionnumber\ userresponse*}}

| Parameter | Validation | Value |
|---|---|---|
| act | Activity element | |
| act\i | Optional | ID of the activity the response is intended for. |
| act\sub | Activity completed; optional | \sub0 = not submitted, default. \sub1 = submitted as complete |
| app | Application element | |
| app\i | Optional: Required if activity data is included | GUID of the application server the activity response is intended for. |
| r | User response element; optional | |
| r\i | Action id attribute; optional | ID of the action within the activity. |
| r\q | Question number or id attribute; optional | ID of question for which the response is intended. |
| r\ | Response text; optional | The user's response to the question |
| nv | Navigation element; optional | Specifies the users navigation choice. |
| nv\q | Question number attribute | Specifies direct navigation to a specific question number. |
| nv\b | Back attribute | Specifies backward navigation to the previous action. Activity specific. |
| nv\f | Forward attribute | Specifies forward navigation to the next action. Activity specific. |

Example 1: Activity Request with response data.
SDTP/1.0 /act
ri:101
cl:54
{act\i 43920afel28ca82al{app\i 5899128ca5637be36}{r\i4\q1\ 47.3}}

Example 2: Activity Request with response data and navigation to question 5.
SDTP/1.0 /act
ri:101
cl:54
{act\i 43920afe128ca82a1{app\i 5899128ca5637be36}{r\i4\q1\ 47.3}{nv\q5}}

Example 3: Activity Request with credentials supplied
SDTP/1.0 /act
ri:101
cl:54
{kc\k a387b1{app\i 3d8920a182ef4829}}

### Response

Activity data is contained in device markup.

Example 1: Standard response with activity data.
SDTP/1.0 200 OK
ru:/act
ri:101
cl:82
*activity markup data*

Example 2: Response with authentication request.
SDTP/1.0 401 Unauthorized
ru:/act
ri:101
c1:82
{auth{app\i 5899128ca5637be36\n AccelTest}{p\ Enter your student ID:}}

Result Codes:

| Code | Description |
|---|---|
| 200 | OK |
| 401 | Unauthorized |
| 403 | Forbidden |
| 500 | Internal server failure |
| 503 | Service unavailable |

**File List.** Get a list of the files for the device owner from the current application.

### Request

Example 1: Get Files Request
SDTP/1.0 /files
ri:101

Example 2: Get Files Request with credentials supplied
SDTP/1.0 /files
ri:101
cl:54
{kc\k a387b1{app\i 3d8920a182ef4829}}

### Response

Application and File elements are contained in the device markup.

| Parameter | Validation | Value |
|---|---|---|
| fl | filelist element | |
| app | Application element | |
| app\i | Application id attribute; required | GUID of the application server the filelist was served from. |
| hw | Homework element | |
| hw\i | Homework id attribute; required | ID of the homework file specified by the application. |
| t | Homework title; optional | Text specifying the homework title. |
| no | Note element | |
| no\i | Note id attribute; required | ID of the note file specified by the application. |

Example 1: Standard Response
SDTP/1.0 200 OK
ri:101
{fl{app\i 3d8920a182ef4829} {hw\i ab7291ef3910a12{t\ Chapter 1 Quiz}} {hw\i ab7291ef3910a13{t\ Chapter 1.1 Exercise}} {hw\i ab7291ef3910a13{t\ Chapter 1.1 Exercise}} {no\i ab7291ef3910a14}}

Example 2: Response with authentication request.
SDTP/1.0 401 Unauthorized
ru:/files
ri:101
cl:82
{auth{app\i 5899128ca5637be36\n AccelTest}{p\ Enter your student ID:}}

Result Codes:

| Code | Description |
|---|---|
| 200 | OK |
| 401 | Unauthorized |
| 500 | Internal server failure |
| 503 | Service unavailable |

**Get File.** Return the requested file from the specified application server.

### Request

SDTP/1.0 /getf
{f\i *file_id*}{app\i *application_server_guid*}

| Parameter | Validation | Value |
|---|---|---|
| f | File element; required | |
| f\i | File id attribute; required | GUID identifying the file to get. |
| app | Application element; required | |
| app\i | Application id attribute; required | GUID of the application server the file was served from. |

Example:
SDTP/1.0 /getf
ri:101
cl:58
{f\i ab7291ef3910a12{app\i 3d8920a182ef4829}}

### Response

Raw file data is sent in response. For homework and notes, the format corresponds to the compact markup language.

Example:
SDTP/1.1 200 OK
ri:101
cl:293
{no\i 3829a3be2763aa17{dt\ 20050612}{t\ Score Results}{fr\ Mrs. Smith}{bd\ Congratulations. You scored 85% on the Chapter 1 quiz. Be sure to read the next chapter, sections 1-4 for tomorrow's class.}}

Result Codes:

| Code | Description |
|---|---|
| 200 | OK |
| 401 | Unauthorized |
| 500 | Internal server failure |
| 503 | Service unavailable |
| 506 | File not found |

**Confirm File.** Confirm that a file was received successfully.

### Request

SDTP/1.0 /conf
{f\i *file_id*} {*app\*i *application_server_guid*}

| Parameter | Validation | Value |
|---|---|---|
| f | File element; required | |
| f\i | File id attribute; required | GUID identifying the file to get. |
| app | Application element; required | |
| app\i | Application id attribute; required | GUID of the application server the file was served from. |

Example:
SDTP/1.0 /conf
ri:101
cl:68
{f\i ab7291ef3910a12{app\i 3d8920a182ef4829}}

### Response

SDTP/1.1 200 OK
ri:101

Result Codes:

| Code | Description |
|---|---|
| 200 | OK |
| 401 | Unauthorized |
| 500 | Internal server failure |
| 503 | Service unavailable |
| 516 | File not found |

**Put File.** Upload a homework file to an application program 22.

### Request

Homework response data file.
SDTP/1.0 /putf
ri:101
{f\i *fileid*{app\i *appid*}*homework markup*}

| Parameter | Validation | Value |
|---|---|---|
| f | File element; required | |
| f\i | Homework id attribute; required | The id identifying the file. |
| app | Application element; required | |
| app\i | Application id attribute; required | GUID of the application server the activity response is intended for. |
| hw | Homework element; required | |
| hw\sub | Homework submitted attribute; optional | \sub0 = not submitted, default. \sub1 = submitted as complete |
| r | User response element; optional | |
| r\i | Action id attribute; optional | ID of the action within the activity. |
| r\q | Question number or id attribute; optional | ID of question for which the response is intended. |
| r\ | Response text; optional | The user's response to the question |

Example homework upload:
SDTP/1.0 /putf
ri:101
cl:124
{f\i ab7291ef3910a12{app
3d8920a182ef4829}{hw\subl{r\il\ql\b}{r\i2\q2\ b}{r\i3\q3\ a}{r\i4\q4\ 42.3} {r\i5\q5\ t}}}

### Response

SDTP/1.1 200 OK
ri:101

Result Codes:

| Code | Description |
|---|---|
| 200 | OK |
| 401 | Unauthorized |
| 500 | Internal server failure |
| 503 | Service unavailable |
| 516 | File not found |
| 517 | Server is out of storage space |

The wireless audience response system described herein may be used in a variety of scenarios. Similarly, the application programs 22 may be implemented as any of a number of different types of programs. Now, several usage scenarios or "use cases" for the wireless audience response system will be described, with appropriate references to FIG. 1.

**First Run Setup.** This use case details the first run setup experience. The application program 22A in this scenario is a "first run" application, which is the application that is invoked after a software installation on the computer 12 is complete. This "first run" application configures the access point 14, guides the teacher through a setup procedure of the handheld unit 16, and performs other "one time, first run" tasks.

### Use case begins.

1. Application program 22A launches and requests teacher hook up access point 14.
2. Teacher locates access point 14 and hooks it up to the computer 12 via the USB cable.
3. Teacher clicks Next button in the installer utility.
4. Application program 22A verifies access point 14 is working.
5. Application program 22A requests teacher specify name of access point 14.
6. Teacher specifies name as *Mrs. Jones' Class.*
7. Application program 22A requests that the teacher power on a handheld unit 16.
8. Teacher powers on a handheld unit 16.
9. Teacher is shown on screen of application program 22A UI how to connect to wireless network 24 if there is more than one network showing up.
10. Application program 22A requests teacher press ENTER button on handheld unit 16.
11. Teacher presses ENTER button.
12. Application program 22A verifies the handheld unit 16 and access point 14 are working.
13. Application program 22A asks if teacher wants to secure the access point 14.
14. Teacher indicates she does.
15. Application program 22A requests security settings for the access point 14.
16. Teacher enters the information.
17. Application program 22A indicates the teacher needs to update the network settings on each handheld unit 16 that will connect to this access point 14.
18. Teacher updates the settings on each handheld unit 16 as needed.

### Use case ends.

The application program 22A might include a step that asks whether the teacher wants to assign ownership of devices to students. If the teacher will not be assigning ownership, then setup is complete. If ownership is desired, handheld unit 16 might do it or the application program 22A could do it. Alternatively, student rosters may be stored on the remote computer 28, which the teacher could access via a website and download.

**Network security setup.** This use case details the steps for establishing advanced network security settings.

### Use case begins.

1. Teacher installs service program 26 and connects access point 14.
2. Teacher launches utility to configure service program 26.
3. Teacher runs service program 26 using utility.
4. Teacher enables security settings, including setting an encryption key of "0ab31 def5" to the access point 14.
5. Teacher names her network (wireless network 24) *Mrs. Smith's Class.*
6. Teacher quits the utility.
7. Teacher powers on handheld unit 16.
8. Teacher selects "Security" in "Settings" menu of handheld unit 16.
9. Teacher enters encryption key "0ab31 def5".
10. Teacher selects "Search For Networks" in "Settings" menu.
11. Handheld unit 16 performs an active scan for 802.15.4 networks in range.
12. Handheld unit 16 locates two networks, *Mrs. Smith's Class* and *Science Lab.*
13. Handheld unit 16 displays list of network names.
14. Teacher selects *Mrs. Smith's Class.*
15. Handheld unit 16 connects to wireless network 24.
16. Teacher has confirmed device network settings work correctly.

### Use case ends.

If encryption keys are used, this use case may include the steps to specify these settings as well. Both the access point 14 and handheld unit 16 would include setup steps to input the keys and settings for encryption.

**Power on, shared device.** This use case details the steps of powering on a shared handheld unit 16.

### Use case begins.

1. Student powers on handheld unit 16.
2. Handheld unit 16 checks for existence of ownership of the device.
3. Handheld unit 16 determines device is NOT owned.
4. Handheld unit 16 scans for 802.15.4 networks in range.
5. Handheld unit 16 locates two networks, *Mrs. Smith's Class* and *Science Lab.*
6. Handheld unit 16 displays list of network names.
7. Student selects *Mrs. Smith's Class.*
8. Handheld unit 16 connects to wireless network 24.
9. Student selects Join Session from main menu of handheld unit 16.
10. Handheld unit 16 sends an "Activity" request to the service program 26.
11. Service program 26 responds there is no live activity running.
12. Handheld unit 16 displays main screen and waits for ENTER to be pressed.

### Use case ends.

**Owner assignment.** This use case describes the process to assign an owner to a handheld unit 16.

### Use case begins.

1. Homeroom begins.
2. Teacher launches application program 22B, which is assumed to be an in-class testing program.
3. Teacher adds each student to the database 18, which is used by the application program 22B, specifying name and other needed properties (grade, id, etc).
4. Application program 22B asks the service program 26 to route all owner assignment requests to its service handler API.
5. Teacher powers on a handheld unit 16.
6. Teacher selects "Assign Owner" from "Settings" menu on handheld unit 16.
7. Handheld unit 16 requests service program 26 to provide owner information.
8. Service program 26 routes the request to the application program 22B.
9. The application program 22B creates a response asking the owner of the handheld unit 16 to provide a Student ID.
10. Teacher enters student ID using keypad of handheld unit 16 and presses ENTER.
11. Handheld unit 16 requests service program 26 to provide owner information for Student ID.
12. Service program 26 posts the request to the application program 22B.
13. The application program 22B processes the request, and responds with Student owner information.
14. Handheld unit 16 accepts owner information and saves it in memory.
15. Teacher calls student to whom the handheld unit 16 was assigned.
16. Teacher gives handheld unit 16 to student.
17. Student selects "Change PIN" from "Settings" menu on handheld unit 16.
18. Handheld unit 16 requests new PIN from Student.
19. Student enters PIN.
20. Handheld unit 16 records new PIN.
21. Student powers off handheld unit 16.
22. Handheld unit 16 locks itself with student PIN.

### Use case ends.

In one embodiment of the invention, when an application program 22 sets the owner information, it will include the key for itself to be stored on the virtual key chain of the handheld unit 16. This way, the student does not need to enter this later when working with application program 22. An application key allows automatic identification of the student/handheld unit 16 when activities and notes are manipulated. The teacher may also elect to label the handheld unit 16 with a waterproof pen or printed label.

**Reset owner.** This use case describes the process to reset the owner on a handheld unit 16.

### Use case begins.

1. Teacher powers on a handheld unit 16.
2. Teacher selects "Reset Owner" from the "Settings" menu.
3. Handheld unit 16 requests that the Administrator PIN be entered.
4. Teacher enters her Administrator PIN.
5. Handheld unit 16 requests that the service program 26 validate the Administrator PIN and reset owner information.
6. Service program 26 validates the Administrator PIN and confirms reset.
7. Service program 26 responds to handheld unit 16 with reset confirmation response.
8. Handheld unit 16 resets itself, clearing owner information, all student data, application keys, PIN, notes, and homework.

### Use case ends.

**Power on, owned device.** This use case details the steps of powering on a handheld unit 16 that is owned.

### Use case begins.

1. Student powers on handheld unit 16.
2. Handheld unit 16 checks for existence of ownership.
3. Handheld unit 16 determines that it is owned.
4. Handheld unit 16 determines whether an owner PIN is present and was used to lock the device.
5. Handheld unit 16 requests student enter the PIN that was used to lock it.
6. Student enters PIN and presses ENTER.
7. Handheld unit 16 determines PIN entered matches owner PIN used to lock device.
8. Handheld unit 16 presents main menu.

### Use case ends.

**Power off, owned device.** This use case details the steps of powering off a handheld unit 16 that is owned.

### Use case begins.

1. Student presses and holds the power button handheld unit 16.
2. Handheld unit 16 checks for existence of ownership of the device.
3. Handheld unit 16 determines device is owned.
4. Handheld unit 16 determines if an owner PIN is present.
5. Handheld unit 16 locks the device before power off. PIN will be required on power on.

### Use case ends.

**Forgotten PIN.** This use case details the steps of powering on a handheld unit 16 that is owned and the owner has forgotten their PIN.

### Use case begins.

1. Student powers on handheld unit 16.
2. Handheld unit 16 checks for existence of ownership of the device.
3. Handheld unit 16 determines device is owned.
4. Handheld unit 16 determines if an owner PIN was present and used to lock the device.
5. Handheld unit 16 requests student enter the PIN that locked the handheld unit 16.
6. Student enters PIN and presses Enter.
7. Handheld unit 16 determines PIN entered does NOT match owner PIN used to lock device.
8. Handheld unit 16 informs user PIN is invalid.
9. Student informs teacher PIN was forgotten.
10. Student hands teacher handheld unit 16.
11. Teacher presses "?" key on the handheld unit 16 screen.
12. Handheld unit 16 scans for 802.15.4 networks in range.
13. Handheld unit 16 locates two networks, *Mrs. Smith's Class* and *Science Lab.*
14. Handheld unit 16 displays list of network names.
15. Teacher selects *Mrs. Smith's Class.*
16. Handheld unit 16 connects to network.
17. Handheld unit 16 requests Administrator PIN.
18. Teacher enters Administrator PIN.
19. Handheld unit 16 requests server validate the PIN.
20. Service program 26 validates Administrator PIN.
21. Handheld unit 16 receives response from server and displays the student's PIN.

### Use case ends.

**Anonymous live activity, unprompted.** This use case details the experience of a handheld unit 16 initiating communication with the wireless network 24 while a live activity is running. This activity is anonymous, speaker paced, unprompted, and requires no user identification.

### Use case begins.

1. Mark launches application program 22C which, in this use case, is sales presentation software.
2. Mark opens presentation he made, which includes a Q&A panel portion that is to be conducted using the handheld units 16.
3. Attendees to Mark's presentation begin to file into the auditorium.
4. Mark's team hands out a handheld unit 16 to each attendee.
5. Mark informs attendees to power on their handheld units 16 and how they will use them.
6. Attendee powers on handheld unit 16.
7. Handheld unit 16 checks for existence of ownership of the device.
8. Handheld unit 16 determines device is NOT owned.
9. Attendee selects "Join Session" from main menu.
10. Handheld unit 16 scans for 802.15.4 networks.
11. Handheld unit 16 locates one network and connects automatically.
12. Handheld unit 16 enters live activity currently in progress.
13. Mark begins his sales presentation.
14. At the slide on the two product offerings the company is considering, Mark asks attendees to pick the product they thing has the best appeal to customers.
15.73% of respondents select product "A" by pressing A on their handheld units 16 and then pressing the ENTER button.
16. 25% of respondents select product "B"
17. 163 of the 184 attendees responded.
18. Mark takes note of the response and moves on in the presentation.
19. At the last slide, Mark asks attendees to press their ENTER buttons a second time, then answer the question on the slide: "Did this presentation provide you with an accurate description of our sales strategy?"
20. 84% of respondents indicate Yes by pressing True button on their handheld unit 16 and then pressing the ENTER button.
21. 15% of respondents indicate No.
22. 180 of the 184 attendees responded.
23. Mark senses that too many attendees responded with "No," so he conducts an ad hoc Q&A session to answer any questions on the strategy.
24. Mark accesses application program 22C to end live activity.
25. Attendee presses ENTER button.
26. Handheld unit 16 returns to main screen and awaits next live activity.
27. Attendee presses ENTER button.
28. Handheld unit 16 requests server for live activity.
29. Server returns response indicating there is not a live activity.
30. Handheld unit 16 displays main screen and awaits next live activity.
31. Mark thanks attendees and asks they return their handheld unit 16 to the staff at the exits.
32. Attendee hands handheld unit 16 to staff at exit.
33. Staff powers off handheld unit 16 and places it in box.

### Use case ends.

If a handheld unit 16 has an owner, the live activity will not be entered automatically. The user will instead see a "Live Activity" menu choice to select to participate in the activity. If the device is owned and locked with a PIN, the PIN will be requested on Power On.

**Anonymous live activity, prompted.** This activity is anonymous, attendee paced, prompted, and requires no user identification. This use case also presents a notion of message notes that might be used.

### Use case begins.

1. Mark launches application program 22D which, in this use case, is survey software.
2. Mark opens survey he made with the software
3. Mark informs attendees to power on and select "Join Session" to participate in the live survey.
4. Attendee powers on handheld unit 16 and selects "Join Session."
5. Handheld unit 16 enters live activity currently in progress.
6. Mark asks that each attendee fill out the survey on their handheld unit 16.
7. Sarah, an attendee, reads the first question "How would you rate the speaker?, A: Excellent, B: Good, C: Fair, D: Poor"
8. Sarah presses B and then presses ENTER.
9. Handheld unit 16 requests the server to process the response.
10. Application program 22D processes the response.
11. Handheld unit 16 displays the next question.
12. Sarah answers the next question.
13. Application program 22D processes the response.
14. Sarah answers the last question and presses ENTER.
15. Application program 22D processes the response.
16. Application program 22D returns a message to display to Sarah.
17. Handheld unit 16 receives the response and displays a message that was sent to her. The note reads "Thank you for your attendance to this year's conference. You can locate presentation materials online at www.presos.com/2005. See you next year."
18. Sarah notes the web site and powers off the handheld unit 16.

### Use case ends.

**Student identification**. This use case details the process of identifying a student to a host application and storing the login identification information in a key chain key. The key chain device is available for devices that have been assigned an owner. The key chain remembers the login credentials for each application and is used to automatically identify the student the next time he accesses the system 10.

### Use case begins.

1. Teacher launches application program 22E which, in this use case, is a math quiz program.
2. Teacher configures application program 22E to host a live quiz activity for the class.
3. Teacher selects the option to save individual student responses for later reporting.
4. Teacher directs students to power on their handheld unit 16 and participate in the application program 22E live activity.
5. Student powers up handheld unit 16.
6. Student engages handheld unit 16 in live activity.
7. Handheld unit 16 sends request to service program 26 for live activity.
8. Application program 22E cannot determine student making request.
9. Application program 22E requests student login to identify themselves.
10. Handheld unit 16 checks key chain for saved credentials for application program 22E.
11. Handheld unit 16 does not find saved credentials for application program 22E.
12. Handheld unit 16 displays login screen, requesting student identification for application program 22E.
13. Student enters application program 22E login and presses ENTER button.
14. Application program 22E authenticates login for student.
15. Application program 22E responds to handheld unit 16 with current classroom activity for the student.
16. Handheld unit 16 receives the live activity from application program 22E.
17. Handheld unit 16 stores credentials for accessing application program 22E in the key chain.
18. Handheld unit 16 displays the appropriate screen for the live activity.

### Use case ends.

**Teacher paced, prompted live activity.** This use case details the steps as a student works with the teacher on a live, paced, and prompted activity.

### Use case begins.

1. Teacher launches application program 22B.
2. Teacher launches Classroom Activity wizard on the application program 22B.
3. Teacher configures options for activity. (teacher paced, Quiz, prompted, no calculator, etc).
4. Teacher clicks Start button in wizard UI.
5. Teacher directs students to power on their handheld unit 16 and select "Join Session" to participate in the live activity.
6. Student powers up handheld unit 16 and joins session.
7. Handheld unit 16 requests live activity from service program 26.
8. Application program 22B determines student making request.
9. Application program 22B determines current live activity for student.
10. Application program 22B responds with Question #1.
11. Student reads question and presses "C" button.
12. Student presses ENTER button.
13. Handheld unit 16 requests service program 26 to record answer.
14. Application program 22B determines student making request.
15. Application program 22B determines student activity from request.
16. Application program 22B determines current classroom activity for student.
17. Application program 22B determines current activity matches student request activity.
18. Application program 22B records answer for question #1.*
19. Application program 22B responds to handheld unit 16 with response that answer was recorded, wait for your teacher.
20. Handheld unit 16 displays wait prompt and waits for next press of ENTER button.
21. Teacher waits while all students answer.
22. Teacher stops accepting responses for question #1.
23. Teacher reviews answers in application program 22B.
24. Teacher presents lesson material for question #2.
25. Teacher clicks the Next Question button on the application program 22B.
26. Application program 22B displays question #2.
27. Teacher directs students to press the ENTER button on their handheld unit 16.
28. Student presses ENTER button.
29. Handheld unit 16 requests activity from server.
30. Application program 22B responds with question #2.
31. Handheld unit 16 displays true false question screen to student.
32. Student reads question and presses "True" button.
33. Student presses ENTER button.
34. Handheld unit 16 requests server to record answer.
35. Application program 22B records answer for question #2.*
36. Teacher waits while all students answer.
37. Teacher stops accepting responses.
38. Application program 22B displays results screen.
39. Teacher directs students to press the ENTER button on their handheld units 16.
40. Student presses ENTER button.
41. Application program 22B tabulates score for each student.
42. Application program 22B responds with quiz results.
43. Handheld unit 16 displays results screen to student.

### Use case ends.

* The application program 22A may elect to reject the answer to a question if the question is no longer the current question that the teacher is showing on her screen.

**Teacher paced, unprompted live activity.** This use case details the steps as a student works with the teacher on a live paced, unprompted activity in the classroom. Application program 22 is host of the live activity in this case.

### Use case begins.

1. Teacher launches application program 22B.
2. Teacher launches Teacher Paced Session wizard.
3. Teacher configures options for activity. (Quiz, unprompted, no calculator, etc).
4. Teacher directs students to power on their handheld units 16 and select "Join Session" to participate in the live activity.
5. Student powers up handheld unit 16 and connects to network.
6. Student engages handheld unit 16 in live activity.
7. Handheld unit 16 requests server for live activity.
8. Application program 22B determines student making request.
9. Application program 22B determines current live activity for student.
10. Application program 22B responds with teacher paced, unprompted activity.
11. Handheld unit 16 displays "ready for your response" screen.
12. Teacher presents lesson material for question #1.
13. Teacher directs students to enter A, B, C, or D for their answer to the question on the board.
14. Student presses "C" button.
15. Student presses ENTER button.
16. Handheld unit 16 requests server to record answer.
17. Application program 22B determines student making request.
18. Application program 22B determines student activity from request.
19. Application program 22B determines current classroom activity for student.
20. Application program 22B determines current activity matches student request activity.
21. Application program 22B records answer for question #1.*
22. Application program 22B responds with a prompt that the answer was recorded and to wait for teacher.
23. Handheld unit 16 displays prompt.
24. Teacher waits while all students answer.
25. Teacher stops accepting responses.
26. Teacher reviews answers using chart UI in application program 22B.
27. Teacher clicks the Next Question button on the application program 22B.
28. Application program 22B displays question #2.
29. Teacher presents lesson material for question #2.
30. Teacher directs students to press ENTER button, then enter True of False for their answer to the question on the board.
31. Student presses "True" button.
32. Student presses ENTER button.
33. Handheld unit 16 requests server to record answer.
34. Application program 22B determines student making request.
35. Application program 22B determines student activity from request.
36. Application program 22B determines current classroom activity for student.
37. Application program 22B determines current activity matches student request activity.
38. Application program 22B records answer for question #2.*
39. Application program 22B responds with a prompt that the answer was recorded and to wait for teacher.
40. Handheld unit 16 displays prompt.
41. Teacher waits while all students answer.
42. Teacher stops accepting responses.
43. Teacher reviews answers using chart UI in application program 22B.
44. Teacher clicks the Done button on the application program 22B UI.
45. Teacher directs students to turn off their handheld units 16.

### Use case ends.

**Student paced, prompted live activity.** This use case details the steps as a student works with the on an individualized live paced, prompted activity in the classroom. Application program 22 is host of the live activity in this case.

### Use case begins.

1. Teacher launches application program 22B.
2. Teacher launches Student Session wizard.
3. Teacher configures options for activity. (student paced, Quiz, prompted, shuffle, time limit, no calculator, etc).
4. Teacher directs students to power on their handheld units 16 and join the live activity.
5. Student powers up handheld unit 16 and connects to network.
6. Student engages handheld unit 16 in live activity.
7. Responder requests server for live activity.
8. Application program 22B determines student making request.
9. Application program 22B determines current classroom activity for student.
10. Application program 22B responds with Student Paced/Prompted activity.
11. Handheld unit 16 displays multiple choice question #1 to student.
12. Student reads question and presses "C" button.
13. Student presses ENTER button.
14. Handheld unit 16 requests service program 26 to record answer.
15. Application program 22B determines student making request.
16. Application program 22B determines student activity from request.
17. Application program 22B determines current classroom activity for student.
18. Application program 22B determines current activity matches student request activity.
19. Application program 22B records answer for question #1.
20. Application program 22B responds to handheld unit 16.
21. Handheld unit 16 displays true false question #2 to student.
22. Student reads question and presses "True" button.
23. Student presses ENTER button.
24. Handheld unit 16 requests service program 26 to record answer.
25. Application program 22B records answer and responds to handheld unit 16.
26. Handheld unit 16 displays final question to student.
27. Student reads question and presses appropriate answer button.
28. Student presses ENTER button.
29. Handheld unit 16 displays end of assignment screen.
30. Student uses keys on handheld unit 16 to move back and forth to each question for review.
31. Student selects menu to exit activity.
32. Handheld unit 16 asks student if they are ready to submit the assignment as complete.
33. Student presses the "Yes" key and then presses ENTER key.
34. Handheld unit 16 requests erver to submit completed activity.
35. Application program 22B marks activity submitted and completed.

### Use case ends.

**Student paced, unprompted live activity.** This use case details the steps as a student works with the on an individualized live paced, unprompted activity in the classroom. Application program 22B is host of the live activity in this case.

### Use case begins.

1. Teacher launches application program 22B.
2. Teacher launches Classroom Activity wizard.
3. Teacher configures options for activity. (student paced, unprompted, time limit, no calculator, etc).
4. Teacher hands out hard copy assignments.
5. Teacher clicks Start button in wizard UI.
6. Teacher directs students to power on their Responder and participate in the live activity.
7. Student powers up handheld unit 16 and connects to network.
8. Student engages handheld unit 16 in live activity.
9. Handheld unit 16 requests live activity.
10. Application program 22B determines student making request.
11. Application program 22B determines current classroom activity for student.
12. Application program 22B responds with student paced, unprompted task.
13. Service program 26 responds to handheld unit 16 with classroom task.
14. Handheld unit 16 disables calculator.
15. Handheld unit 16 displays question #1 screen.
16. Student reads question #1 from hard copy and presses "C" button.
17. Student presses ENTER button.
18. Handheld unit 16 requests host to record answer.
19. Application program 22B determines student making request.
20. Application program 22B determines student activity from request.
21. Application program 22B determines current classroom activity for student.
22. Application program 22B determines current activity matches student request activity.
23. Application program 22B records answer for question #1.
24. Application program 22B responds to handheld unit 16.
25. Handheld unit 16 displays question #2 screen.
26. Student reads question #2 and presses "True" button.
27. Student presses ENTER button.
28. Handheld unit 16 requests service program 26 to record answer.
29. Application program 22B records answer for question #2 and responds to handheld unit 16.
30. Handheld unit 16 displays question #N screen.
31. Student reads question and presses appropriate answer button.
32. Student presses ENTER button.
33. Handheld unit 16 displays question #N+1 screen.
34. Student uses keys on handheld unit 16 to move back and forth to each question for review.
35. Student selects menu to "Submit" completed activity.
36. Handheld unit 16 requests service program 16 to submit activity.
37. Application program 22B marks activity submitted and completed.
38. Application program 22B tabulates score for student.*
39. Application program 22B responds with a results to handheld unit 16.
40. Handheld unit 16 displays results screen to student.
41. Teacher watches application program 22B screen as students complete their activity.
42. Time limit for activity has less than 2 minutes left.
43. Students are informed that the time is almost up.
44. Time limit expires and application program 22B ends the activity.

### Use case ends.

### Assessment Master activity.

### Use case begins.

1. Teacher launches application program 22F on her computer. In this example, application program 22F is a testing program that interacts with an on-line testing service.
2. Teacher directs students to power on their handheld unit 16 and participate in the live activity.
3. Student #1 powers up handheld unit 16 and connects to the wireless network 24.
4. Student #1 engages handheld unit 16 in live activity.
5. Handheld unit 16 requests host for live activity.
6. Application program 22F requests student #1 enter Form ID.
7. Handheld unit 16 displays screen prompting student #1 to enter Form ID.
8. Teacher visits each student and provides them with their Form ID.
9. Student #1 enters the Form ID supplied by the teacher.
10. Handheld unit 16 provides host with Form ID.
11. Application program 22F validates Form ID with on-line web service.
12. Application program 22F requests assessment from on-line web service.
13. On-line web service locates assessment for the Form ID.
14. Application program 22F downloads the assessment.
15. Application program 22F responds to handheld unit 16 with the first question on the assessment.
16. Handheld unit 16 displays the first question to student #1.
17. Student #2 enters her Form ID.
18. Handheld unit 16 provides host with Form ID.
19. Application program 22F validates Form ID with on-line web service.
20. Application program 22F checks local cache for assessment.
21. Application program 22F locates assessment for the Form ID.
22. Application program 22F responds to handheld unit 16 with the first question on the assessment.
23. Handheld unit 16 displays the first question to student #2.

### Use case ends.

An optional scenario might include the teacher identifying the assessment the entire class will participate in and download it before having students engage in the activity. This might avoid the delay that a student will encounter waiting for the assessment to download after entering a Form ID. If a single assessment is identified, application program 22F might ask for the student ID instead of Form ID. Application program 22F would use the student ID to look up a Form ID if necessary. With this approach, students could use their well known student number that does not change, instead of a Form ID that is unique for each assessment they might take.

**Falling behind on a live activity*.*** This use case details the scenario when a student falls behind the live activity and the teacher has moved ahead.

### Use case begins.

1. Student returns his attention to the handheld unit 16 after day dreaming for 15 minutes.
2. Student reads question # 4 and presses "C" button.
3. Student presses ENTER button.
4. Handheld unit 16 requests server to record answer.
5. Application program 22B determines student making request.
6. Application program 22B determines student activity from request.
7. Application program 22B determines current live activity for student.
8. Application program 22B determines current activity does match student request activity.
9. Application program 22B responds to handheld unit 16 with question # 12.
10. Handheld unit 16 displays question #12 to student.
11. Student reads question #12 and presses "True" button.
12. Student presses ENTER button.
13. Handheld unit 16 requests server to record answer.
14. Student is now in sync with rest of class.

### Use case ends.

**Expired activity.** This use case details the scenario in which a student falls behind or does not finish the live activity and the teacher has quit the classroom application or has moved on to another activity. The live activity that the student was working on is considered expired.

### Use case begins.

1. Student returns his attention to the handheld unit 16 after day dreaming for 15 minutes.
2. Student reads current question and presses "C" button.
3. Student presses ENTER button.
4. Handheld unit 16 requests service program 26 to record answer.
5. Application program 22B determines student making request.
6. Application program 22B determines student activity from request.
7. Application program 22B determines current live activity for student.
8. Application program 22B determines current activity does NOT match student request activity.
9. Application program 22B responds to handheld unit 16 that activity is over.
10. Handheld unit 16 displays message to student.
11. Student acknowledges message.
12. Handheld unit 16 exits activity and displays appropriate screen, such as another live activity or the main screen if no live activity is running, or a login to identify oneself to another application that is now running.

### Use case ends.

**Homework activity.** This use case details the creation and assignment of homework activities to students with handheld unit 16. Homework may be given to handheld unit 16 that have been assigned to an owner.

### Use case begins.

1. Teacher launches application program 22B.
2. Teacher launches Homework Activity wizard.
3. Teacher configures options for the homework activity. (Quiz, prompted, shuffle, etc).
4. Teacher clicks Finish button in wizard UI.
5. Application program 22B assigns the homework to each student in the grade book.
6. Teacher directs students to power on their handheld units 16 and synchronize their homework and notes.
7. Student powers up handheld unit 16 and connects to wireless network 24.
8. Student selects "Synchronize" from the main menu.
9. Responder requests list of homework from application program 22B.
10. Application program 22B determines student making request.
11. Application program 22B provides list of new and outstanding homework for student.
12. Handheld unit 16 deletes homework that is no longer on list from its memory.
13. Handheld unit 16 uploads homework that has been completed or updated.
14. Application program 22B receives homework activities from handheld unit 16.
15. Application program 22B marks date of submission on homework. One item is two days late.
16. Application program 22B removes completed homework from the list.
17. Application program 22B retains homework items that are not yet due or complete.
18. Handheld unit 16 requests updated list of homework from application program 22B.
19. Application program 22B provides updated list.
20. Handheld unit 16 verifies completed homework was accepted and removed from application program 22B list.
21. Handheld unit 16 deletes completed homework from its memory.
22. Handheld unit 16 requests the new homework activity from application program 22B
23. Application program 22B provides the new homework activity when requested.
24. Handheld unit 16 provides confirmation to application program 22B that homework was received.
25. Application program 22B marks the homework "Received".
26. Handheld unit 16 completes update of homework.
27. Student powers off handheld unit 16, goes home.
28. Student powers on handheld unit 16.
29. Student selects a homework activity.
30. Student answers questions in activity.
31. Student marks the activity completed.

### Use case ends.

Collected activities are deleted automatically off the handheld unit 16. A student may delete homework activities that are not "locked" by the teacher. These might be extra-credit activities.

**New activity.** This use case details the creation of a new homework activity from the student. Homework activities can only be done on a handheld unit 16 that has been assigned to an owner.

### Use case begins.

1. Teacher launches application program 22B.
2. Teacher starts an answer key in application program 22B with no questions due to time constraints.
3. Teacher directs students to power on their handheld unit 16 and update their homework activities.
4. Student powers up handheld unit 16 and connects to wireless network 24.
5. Teacher informs student to create a new homework activity as she has not had time to set things up in application program 22B.
6. A new activity should include a form ID or some way to identify the assignment in application program 22B.

### Use case ends.

**Notes from the teacher.** This use case details the handling of Notes sent from the teacher to the handheld unit 16.

### Use case begins.

1. Teacher launches application program 22B.
2. Teacher selects Johnny from the grade book.
3. Teacher right clicks and selects Notes.
4. Teacher adds a Note to Johnny's parents indicating certain behavior problems Johnny is exhibiting.
5. Class period begins.
6. Teacher directs students to power on their handheld units 16 and synchronize their homework activities.
7. Johnny powers up his handheld unit 16 and connects to the wireless network 24.
8. Johnny selects Synchronize from the main menu.
9. The handheld unit 16 requests file list which includes notes.
10. Application program 22B determines student making request.
11. Application program 22B provides current list of notes for student.
12. Handheld unit 16 deletes notes marked "read" which are no longer on the list from memory, asking user to confirm each delete.
13. Handheld unit 16 requests new notes
14. Application program 22B provides new notes.
15. Handheld unit 16 indicates synchronize is complete.
16. Johnny powers off handheld unit 16, goes home.
17. Johnny powers on handheld unit 16.
18. Johnny shows his parents the Note from Mrs. Jones.
19. Johnny's parents read the note, get angry, and send Johnny to his room.
20. Johnny's parents call the teacher and schedule a conference as directed by the note.
21. Mrs. Smith launches application program 22B.
22. Teacher selects Johnny from the grade book.
23. Teacher right clicks and selects Notes.
24. Teacher deletes the note she now knows was indeed read by Johnny's parents.

### Use case ends.

Students can delete Notes that are not locked by the teacher. Locked notes are typically those targeted for parents to read.

**Lost device replacement.** This use case illustrates the replacement strategy for dealing with a lost handheld unit 16. The handheld unit 16 is owned and has homework and notes activities on it.

### Use case begins.

1. Student reports to teacher that the dog ate his handheld unit 16.
2. Teacher unpacks a new handheld unit 16 from the box and powers it on.
3. Teacher reassigns ownership. See **Owner assignment** use case.
4. Teacher launches application program 22A.
5. Teacher selects "Synchronize" on handheld unit 16.
6. Handheld unit 16 requests host for homework.
7. Application program 22B provides homework to handheld unit 16.
8. Application program 22B provides notes to handheld unit 16.
9. Teacher quits application program 22B.
10. Teacher hands handheld unit 16 to student.
11. Teacher informs student that they will have to make up lost work that they had not turned in.
12. Student goes home with handheld unit 16.
13. Student works on homework activities, redoing the ones they had started before losing the device.
14. Student returns to class the next day and submits homework a day late.

### Use case ends.

**Delete notes.** This use case details the steps to delete notes.

### Use case begins.

1. Student powers up handheld unit 16.
2. Student reads note from last week on reading assignment.
3. Student presses the menu key 48 to exit note.
4. Handheld unit 16 displays message "Keep this Note?" on the LCD screen 32.
5. Student selects "No" and presses the Enter key 46.
6. Handheld unit 16 deletes old note.

### Use case ends.

As noted in previous use cases, only homework and notes that are not "locked" can be deleted by the user. Locked Notes can only be deleted by the teacher or through an owner reset action. Locked homework activities are deleted when completed and submitted to the host that created them, by the teacher, and by an owner reset action.

It can thus be seen that a new and useful audience response system and method have been described. It should be understood that the illustrated embodiments are examples only, and should not be taken as limiting the scope of the invention. The use of the terms "a" and "an" in the context of describing the invention (especially in the context of the following claims) are to be construed to cover both the singular and the plural. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

## Claims

1. An audience response system comprising:
a base station;
a plurality of handheld units; and
a wireless network,
wherein the system has at least a first mode and a second mode of operation,
wherein, in the first mode of operation,
the base station transmits a question to at least one of the plurality of handheld units over the wireless network,
the handheld unit displays the question to a user, and
in response to the user's input, the handheld user transmits the user's answer to the question to the base station over the wireless network;
wherein, in the second mode of operation,
the base station transmits an answer template corresponding to the question, but not the question itself, to at least one of the plurality of handheld units over the wireless network,
the handheld unit displays the answer template to the user, and
in response to the user's input, the handheld user transmits the user's answer to the question to the base station over the wireless network.

2. The response system of claim 1,
wherein, in the first mode of operation, the base station transmits the question within a markup language document, and
wherein, in the second mode of operation, the base station transmits the answer template within a markup language document.

3. The response system of claim 2,
wherein the markup language document containing the question in the first mode is a compact markup language document generated based on an extensible markup language document, and
wherein the markup language document containing the answer template in the second mode is a compact markup language document generated based on an extensible markup language document.

4. The response system of claim 1,
wherein, in both the first mode and second mode of operation, the handheld unit receives an input of data uniquely identifying the user, and
wherein, in both the first mode and second mode of operation, the handheld unit transmits the identifying data to the base station along with the answer.

5. The response system of claim 4, further comprising a virtual keychain associated with the user,
wherein the identifying data is stored on the virtual keychain, and
wherein, in both first mode and second mode of operation, the handheld unit receives the identity data directly from the virtual keychain.

6. The response system of claim 1,
wherein, in both the first mode and second mode of operation, the base station displays a user interface representing the answers received from the plurality of handheld units.

7. A method for soliciting responses to questions from an audience over a wireless network, the method comprising:
receiving input indicating that a first mode of operation is being selected,
in the first mode of operation, performing steps comprising:
transmitting a question to at least one of the plurality of handheld units over the wireless network,
displaying the question on the handheld unit to a user,
receiving an input response on the handheld unit from the user, and
receiving, over the wireless network, a message comprising the user's input response; and
in the second mode of operation, performing steps comprising:
transmitting an answer template to at least one of the plurality of handheld units over the wireless network,
providing, in a non-electronic form, the question to a user of the handheld unit,
electronically displaying the answer template on the handheld unit to the user,
receiving, on the handheld unit, the user's input response to the question, and
receiving, over the wireless network, a message comprising the user's input response.

8. The method of claim 7, wherein, in the second mode of operation, the providing step comprises speaking the question aloud to the plurality of people.

9. The method of claim 7, wherein, in the second mode of operation, the providing step comprises giving a handout having the question printed thereon to each of the plurality of people.

10. The method of claim 7, wherein, in the second mode of operation, the providing step comprises displaying the question on a screen visible to each of the plurality of people.

11. The method of claim 7, wherein, in the first mode of operation,
the question transmitted by the base station is transmitted within a markup language document,
the displaying step comprises the handheld unit processing the markup language document and displaying the question on a display of the handheld unit in accordance with instructions contained in the markup language document,
the handheld unit receives the user's input in a form defined by the markup language document, and
in the second mode of operation,
the answer template transmitted by the base station is transmitted within a markup language document,
the displaying step comprises the handheld unit processing the markup language document and displaying the answer template on a display of the handheld unit in accordance with instructions contained in the markup language document, and
the handheld unit receives the user's input in a form defined by the markup language document.

12. The method of claim 11,
wherein, in the first mode,
the question is one of a sequence of questions contained within the markup language document,
the displaying step comprises displaying the next question in the sequence only when the handheld unit receives a message via the wireless network indicating permission to advance to the next question.

13. The method of claim 11,
wherein, in the first mode,
the question is one of a sequence of questions contained within the markup language document,
the displaying step comprises displaying the next question in the sequence when prompted by the user.

14. The method of claim 11,
wherein, in the first mode,
the question is one of a sequence of questions contained within the markup language document, and the markup language document includes data indicating whether the user is permitted to display a previously answered question in the sequence.

15. A method for transmitting questions to and receiving answers from a plurality of users in an audience, each of the plurality of users possessing a handheld unit that is in communication, via a wireless network, with a response system comprising a base station, the method comprising:
the base station performing steps comprising:
transmitting, over the wireless network, a mark-up language document to a handheld unit of the plurality of handheld units, the mark-up language document comprising a question;
receiving a response to the question from the handheld unit over the wireless network;
the handheld unit of the plurality of handheld units performing steps comprising:
displaying the question to the user in possession of the handheld unit,
receiving, from the user in possession of the handheld unit, an input response; and
transmitting the input response over the wireless network to the base station.

16. The method of claim 15,
wherein the response system further comprises a database,
wherein the base station performs further steps comprising:
obtaining the question and a correct answer from the database, and
comparing the response received from the handheld unit with the correct answer.

17. The method of claim 15,
wherein the response system further comprises a remote computer that transmits the question to the base station via a public network.

18. The method of claim 15, wherein
the plurality of users are students,
the base station is located in a classroom,
the question is one of a plurality of questions contained in the markup language document, and the plurality of questions represents a homework assignment,
the handheld unit of the plurality of handheld units is possessed by a student of the plurality of students,
the student performs steps comprising:
inputting the response to the handheld unit outside of the classroom while the handheld unit is not in communication with the response system,
repeating the inputting step for each of the questions of the plurality of questions, thereby creating a plurality of responses and completing the homework assignment,
entering the classroom,
after which, the handheld unit possessed by the student performs further steps comprising:
reconnecting to the response system,
transmitting the plurality of responses to the base station, thereby turning in the completed homework assignment.

19. The method of claim 15, wherein
the plurality of users are students,
the handheld unit is possessed by a student of the plurality,
the base station is operated by an instructor,
the base station transmits another markup language document that contains a note from the instructor to the parents or guardians of the student, the markup language document indicating that the note may not be deleted by the student, and
the handheld unit blocks an attempt by the student to delete the note.

20. The method of claim 15, wherein the plurality of users are students and the question is one of a sequence of questions contained in the markup language document, the method further comprising
the base station displaying a user interface to an instructor,
the instructor selecting, via the user interface, an activity for the students to perform,
in response to the instructor's selection, the base station generating the markup language document, and
the handheld unit displaying a the plurality of questions in the sequence as specified by the markup language document.

21. The method of claim 20, wherein the selected activity is a quiz, and the instructor controls, via the base station, the pace at which the handheld unit displays the plurality of questions of the sequence.
